# EUROPEAN PATENT SPECIFICATION

(11) **EP 3 521 998 B1**
(45) Date of publication and mention of the grant of the patent: **12.04.2023**
(21) Application number: 19151027.0
(22) Date of filing: 09.01.2019
(51) Int. Cl.: G06F 3/12

(54) **IMAGE FORMING SYSTEM AND IMAGE FORMING METHOD THAT REDUCES TIME AND EFFORT OF SETTING IN PRINTER DRIVER OF USER TERMINAL**
BILDERZEUGUNGSSYSTEM UND BILDERZEUGUNGSVERFAHREN, DAS DIE ZEIT UND DEN AUFWAND DER EINSTELLUNG IM DRUCKERTREIBER DES BENUTZERENDGERÄTS REDUZIERT
SYSTÈME DE FORMATION D'IMAGES ET PROCÉDÉ DE FORMATION D'IMAGES PERMETTANT DE RÉDUIRE LE TEMPS ET L'EFFORT DE RÉGLAGE D'UN PILOTE D'IMPRIMANTE DE TERMINAL D'UTILISATEUR

(30) Priority: 31.01.2018 JP 2018014941; 31.01.2018 JP 2018014942; 31.01.2018 JP 2018014943
(43) Date of publication of application: 07.08.2019
(73) Proprietor: Kyocera Document Solutions Inc., Osaka-shi, Osaka 540-8585 (JP)
(72) Inventor: HIWATARI, Tatsuya, Osaka-shi, Osaka 540-8585 (JP); SATO, Masafumi, Osaka-shi, Osaka 540-8585 (JP); SUN, Zhenyu, Osaka-shi, Osaka 540-8585 (JP); TSUDA, Keiji, Osaka-shi, Osaka 540-8585 (JP)
(74) Representative: Treeby, Philip David William

(56) References cited:
- WO-A1-00/68817
- US-A1- 2007 027 990
- US-A1- 2010 177 340

## Description

### Field of the Invention

The present disclosure is related with the image forming system and the image forming method in which a plurality of image forming apparatuses, a plurality of user terminals, and a managing server are connected via the network.

### Background of the Invention

As typical technology, the image forming system in which a plurality of image forming apparatuses, such as a printer, or the like, a user terminal, such as a personal computer, or the like, a managing server are connected via the network is known. In this technology, based on a printer driver installed in the user terminal, after a success of the user authentication by a managing server, it transmits a print job from the user terminal to the image forming apparatus and executes the job.

WO 00/68817 discloses print jobs transferred between common and individual queues. US 2007/027990 discloses a printing system comprising multiple queues. US 2010/177340 discloses a printing system which receives print jobs and stores them in a queue.

### Summary of the Invention

According to a first aspect of the present invention, there is provided an image forming system in which a plurality of user terminals that transmit a print job, a plurality of image forming apparatuses that execute a print job, and a managing server are connected via a network, wherein the managing server includes: a common queue that stores the print job transmitted from each user terminal, temporarily, a plurality of individual queues associated with the plurality of image forming apparatuses by one to one, an individual queue setting accepting part operable to receive from the each user terminal a queue name of the individual queue for each user; and register the queue name into individual queue setting information, a print job distributing part that distributes the print job stored in the common queue to the individual queue based on the individual queue setting information, a print job transmitting part that transmits the print job stored in the individual queue to the image forming apparatus associated with the individual queue, and an authentication part that performs a user authentication; wherein the individual queue setting accepting part (i) determines whether setting of the individual queue, which the user authenticated by the authentication part sets as a output destination of the print job in the individual queue setting information, is finished or not, and (ii) transmits, if the individual queue is not set to the output destination of the print job, a individual queue setting screen to the user terminal, and the each user terminal includes: a printer driver, a display part that displays the individual queue setting screen transmitted from the individual queue setting accepting part of the managing server, a individual queue setting part that transmits to the individual queue setting accepting part of the managing server the queue name of the individual queue selected by the user via the individual queue setting screen, and a print job generating part that generates the print job based on the printer driver and sends the print job to the common queue of the managing server.

According to a second aspect of the present invention there is provided an image forming method in which a plurality of user terminals that transmit a print job, a plurality of image forming apparatuses that execute a print job, and a managing server are connected via a network, wherein:
the managing server includes (i) a common queue that stores the print job transmitted from each user terminal, temporarily, and (ii) a plurality of individual queues associated with the plurality of image forming apparatuses by one to one, and each of the user terminals includes a printer driver, and the method by the managing server includes the steps of: receiving from the each user terminal a queue name of the individual queue for each user, registering the queue name into individual queue setting information, distributing the print job stored in the common queue to the individual queue based on the individual queue setting information, transmitting the print job stored in the individual queue to the image forming apparatus associated with the individual queue, performing a user authentication, determining whether setting of the individual queue, which the user authenticated by the user authentication sets as a output destination of the print job in the individual queue setting information, is finished or not, and transmitting, if the individual queue is not set to the output destination of the print job, a individual queue setting screen to the user terminal; and the method by the each user terminal includes the steps of: displaying the individual queue setting screen transmitted from the managing server, transmitting to the managing server the queue name of the individual queue selected by the user via the individual queue setting screen, and generating the print job based on the printer driver and sends the print job to the common queue of the managing server.

### Brief Description of the Drawings

FIG. 1 is a system configuration figure of an image forming system of a first embodiment according to the present disclosure;
FIG. 2 is a schematic configuration figure of the managing server as shown in FIG. 1;
FIG. 3 shows an example of registration of the individual queue setting information as shown in FIG. 2;
FIG. 4 is a schematic configuration figure of the user terminal as shown in FIG. 1;
FIG. 5 is a flow chart that shows the process flow of the managing server as shown in FIG. 1 accepts a setting of individual queue;
FIG. 6 shows the example of the individual queue setting screen as shown in FIG. 5;
FIG. 7 is a flow chart that shows a flow of a printing process of the image forming system as shown in FIG. 1;
FIG. 8 is a system configuration figure of the image forming system of a second non claimed embodiment according to the present disclosure;
FIG. 9 is a schematic configuration figure of the managing server as shown in FIG. 8;
FIG. 10 shows an example of registration of the individual queue setting information as shown in FIG. 9;
FIG. 11 shows an example of registration of the restriction setting information as shown in FIG. 9;
FIG. 12 shows an example of an individual queue setting screen;

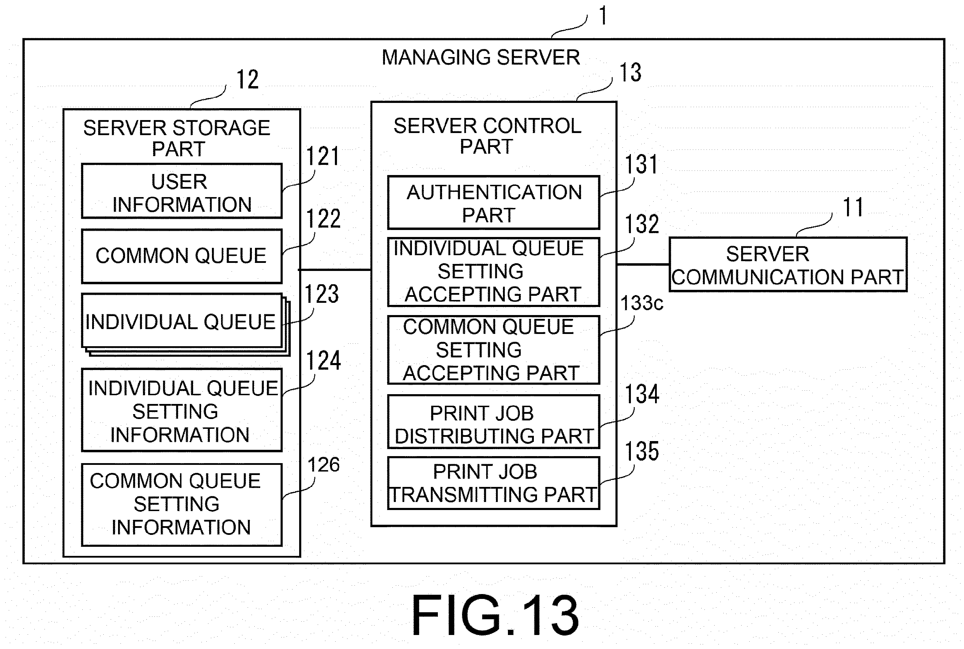

FIG. 13 is a schematic configuration figure of a managing server of an image forming system of a third embodiment according to the present disclosure;
FIG. 14 shows an example of registration of the individual queue setting information as shown in FIG. 13;
FIG. 15 is a schematic configuration figure of an administrator terminal of an image forming system of the third embodiment according to the present disclosure;
FIG. 16 is a flow chart that shows a flow that a managing server of the third embodiment according to the present disclosure accepts job process setting of a print job of common queue;
FIG. 17 is a flow chart shows a process flow that the managing server of the third embodiment according to the present disclosure accepts a setting of individual queue; and
FIG. 18 is a flow chart shows a flow of a printing process of the image forming system of the third embodiment according to the present disclosure.

### Detailed Description of the Invention

### <A first embodiment>

Hereinafter, with reference to figures, a first embodiment of the present disclosure is explained in detail. In following embodiments, the same numerals are given to the configuration that shows an equivalent function.

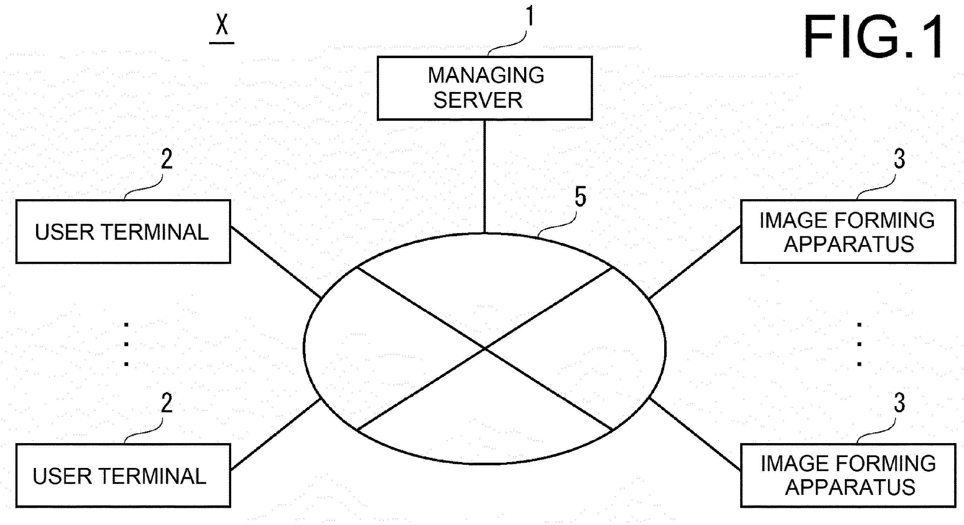

As shown in FIG. 1, image forming system X connects with managing server 1, a plurality of user terminals 2, and a plurality of image forming apparatuses 3, via network 5. Image forming apparatus 3 is a printer, a copying machine, an MFP, or the like, and is provided with a print function.

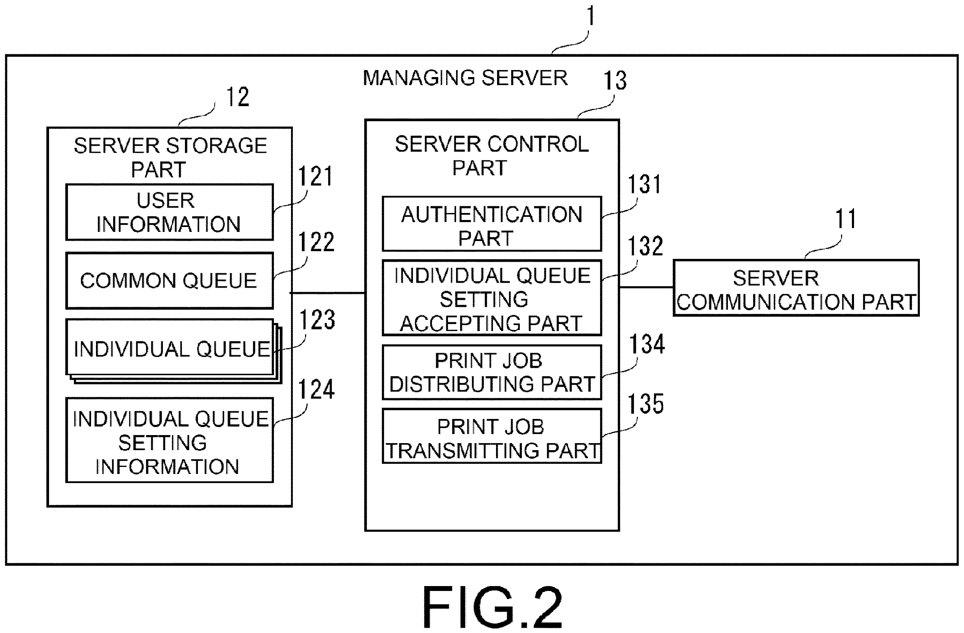

As shown in FIG. 2, managing server 1 is provided with server communication part 11, server storage part 12, and server control part 13.

Server communication part 11 transmits and receives, via networks 5, which is LAN (Local Area Network), the Internet, or the like, various data between a plurality of user terminals 2 and a plurality of image forming apparatuses 3. Server communication part 11 has such a function.

Server storage part 12 is a storage part, such as semiconductor memory and HDD (Hard Disk Drive), or the like. Server storage part 12 is provided with user information 121, common queue 122, a plurality of individual queues 123 that corresponds to a plurality of image forming apparatuses 3 by one to one, and individual queue setting information 124. Also, system construction files, such as a "config.ini" file, or the like, are also stored in server storage part 12.

User information 121 registers a user name (user ID), a password, or the like, used for user authentication.

Common queue 122 is queue that a print job transmitted from each user terminal 2 is stored, temporarily.

A plurality of individual queues 123 is provided as many as the plurality of image forming apparatuses 3 to be managed by the managing server 1, and it corresponds to the plurality of image forming apparatuses 3 by one to one.

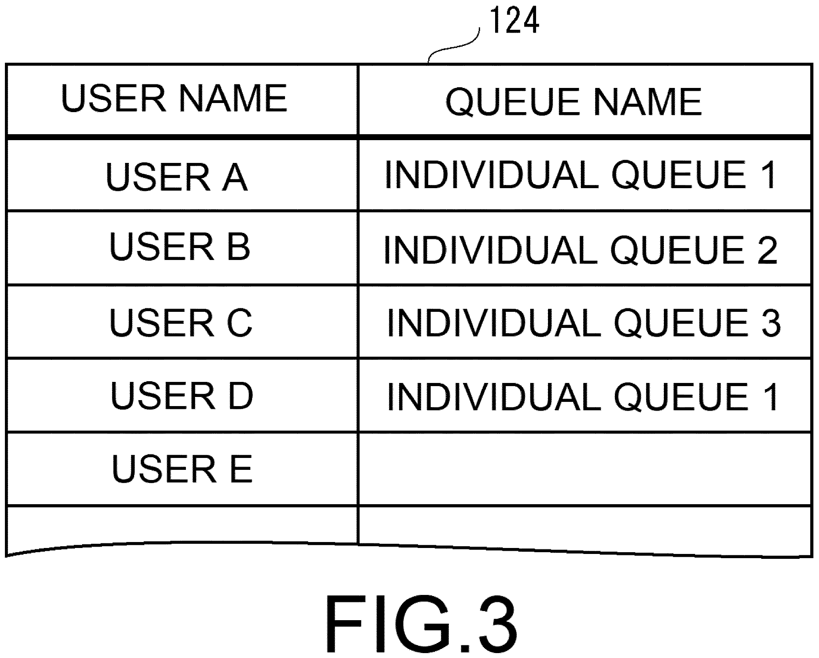

As shown in FIG. 3, individual queue setting information 124 is registered individual queue 123 corresponding to image forming apparatus 3 as an output destination for each user. A user whose queue name is blank as like user E indicates that the queue setting has not been completed yet.

Server control part 13 is provided with CPU (Central Processing Unit), ROM (Read Only Memory), RAM (Random Access Memory), or the like. Server control part 13 is an information processing part, such as a microcomputer, or the like. The control program for operation-controlling managing server 1 is stored in ROM. The CPU of the server control part 13 reads the control program stored in the ROM, develops the control program in the RAM, and executes it. As a result, the CPU controls the entire management server 1.

Also, server control part 13 functions as authentication part 131, individual queue setting accepting part 132, print job distributing part 134, and print job transmitting part 135.

Authentication part 131 compares authentication information with user information 121 stored in server storage part 12. Thereby, user authentication is performed. Authentication part 131 has such a function. Authentication information is a user name (user ID), a password, or the like, which is transmitted via network 5 from user terminal 2 or image forming apparatus 3.

Individual queue setting accepting part 132 accepts the setting of individual queue 123 as the output destination of a print job for each user. Individual queue setting accepting part 132 has such a function. The user can set up individual queue 123. Individual queue 123 that can be set up corresponds to image forming apparatus 3 as the output destination of the print job among the plurality of individual queue 123.

According to the present embodiment, the after-mentioned printer driver 241 installed in each user terminal 2 is set up that the output destination of a print job is commonly set to common queue 122. Therefore, individual queue setting accepting part 132 is provided. This is for setting up image forming apparatus 3 as the output destination of a print job by individual queue 123 in the user side.

Print job distributing part 134 is monitoring the stored condition of the print job of common queue 122. Print job distributing part 134 distributes a print job to any one of the plurality of individual queue 123 based on individual queue setting information 124 when the print job is stored in common queue 122. Print job distributing part 134 has such a function. In addition, a user name of a user who is generated the print job is included in the job information of the print job. Print job distributing part 134 moves the print job to individual queue 123 based on individual queue setting information 124. Individual queue 123 in this case is associated with the user name included in the print job.

Print job transmitting part 135 monitors the stored condition of the print job of each queue 123. Print job transmitting part 135 transmits the print job stored in each individual queue 123 to image forming apparatus 3 corresponding to the respective individual queue 123 via server communication part 11. Print job transmitting part 135 has such a function.

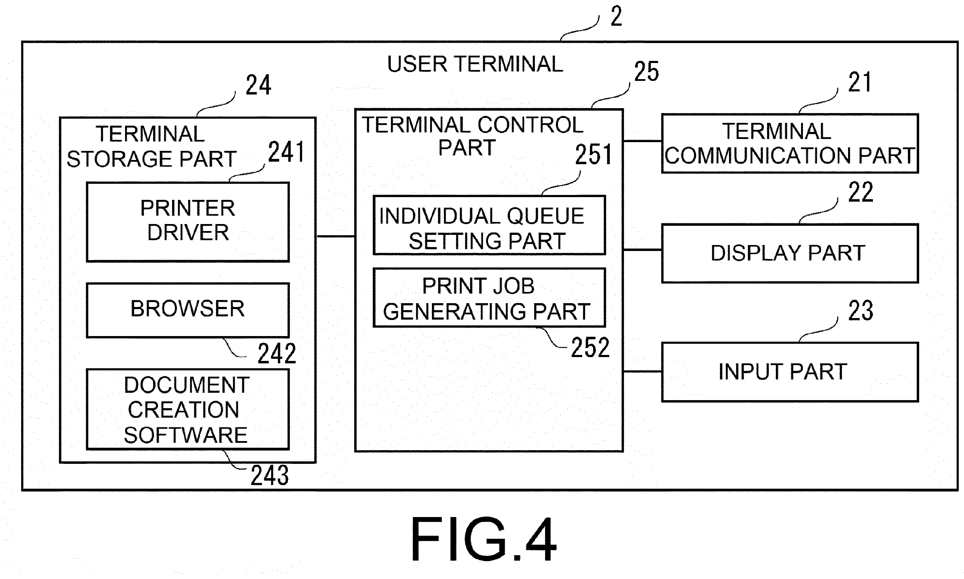

Then, with reference to FIG. 4, the schematic configuration of user terminal 2 is explained.

User terminal 2 is, for example, a personal computer, a tablet terminal, a smart phone, or the like. User terminal 2 is provided with terminal communication part 21, display part 22, input part 23, terminal storage part 24, and terminal control part 25.

Terminal communication part 21 transmits and receives various data among managing server 1 and a plurality of image forming apparatuses 3 via networks 5, which is LAN, the Internet, or the like. Terminal communication part 21 has such a function.

Display part 22 is displaying means such as a display for displaying various information, or the like.

Input part 23 is an input means such as a mouse, a keyboard, a pointing device, or the like. Input part 23 may be provided on the display panel of display part 22 as a transparent touch sensor. That is, it may function as a touch panel with display part 22. Also, input part 23 may read IC cards, such as an employee ID card, or the like, and acquires authentication information, such as a user name, or the like.

Terminal storage part 24 is a storage means, such as semiconductor memory, HDD, or the like. Printer driver 241, browser 242, and document creation software 243 are stored in terminal storage part 24.

Printer driver 241 generates a print job according to an operation instruction of the user inputted from input part 23. Printer driver 241 transmits the generated print job to managing server 1 by terminal communication part 21. Printer driver 241 includes the application program for this purpose. Printer driver 241 is installed in each of the plurality of user terminals 2. The output destination of the print job of printer driver 241 is set as common queue 122 of managing server 1. Therefore, the service person can collectively-deploy printer driver 241 to the plurality of user terminals 2. That is, it is not necessary to change setting of an output destination for each printer driver. Thus, printer driver 241 is in the state installed in user terminal 2.

Browser 242 is an application program that displays a web page such as HTML format, or the like, on the display part 22.

Document creation software 243 is, for example, an application program for viewing, editing, and generating document data, such as Microsoft (registered trademark) Word (registered trademark) format.

Start manipulation of browser 242 or document creation software 243 is performed via input part 23. Then, terminal control part 25 reads browser 242 or document creation software 243 stored in terminal storage part 24, expands it to RAM, and executes it. Then, browser 242 or document creation software 243 is started. Thereby, by using browser 242 or document creation software 243, the user can display image data, HTML data, document data (only henceforth "document data"), or the like on display part 22 and can perform viewing, editing, or the like.

Terminal control part 25 is information processing part, such as a microcomputer provided with CPU, ROM, RAM, or the like. The control program for operation-controlling user terminal 2 is stored in ROM. CPU of terminal control part 25 reads a control program stored in ROM, expands the control program to RAM, executes it, and thus controls an entire user-terminal 2.

Also, terminal control part 25 functions as individual queue setting part 251 and print job generating part 252.

Individual queue setting part 251 communicates with managing server 1 via terminal communication part 21 based on the operation instruction from input part 23. Individual queue setting part 251 sets up individual queue 123 corresponding to image forming apparatus 3 that the user sets as the output destination of a print job. Individual queue setting part 251 has such a function. The output destination of printer driver 241 is set as common queue 122. This is for moving the print job from common queue 122 to individual queue 123 of image forming apparatus 3 desired by the user.

Print job generating part 252 generates the print job that makes the document data of a printing object print when printing of the document data viewed and edited by using browser 242 or document creation software 243 is instructed. Print job generating part 252 has such a function. When printing of document data is instructed, terminal control part 25 reads printer driver 241 stored in terminal storage part 24, expands it to RAM, and executes it. Then, printer driver 241 is started. Thereby, terminal control part 25 functions as print job generating part 252 that realizes the function of printer driver 241.

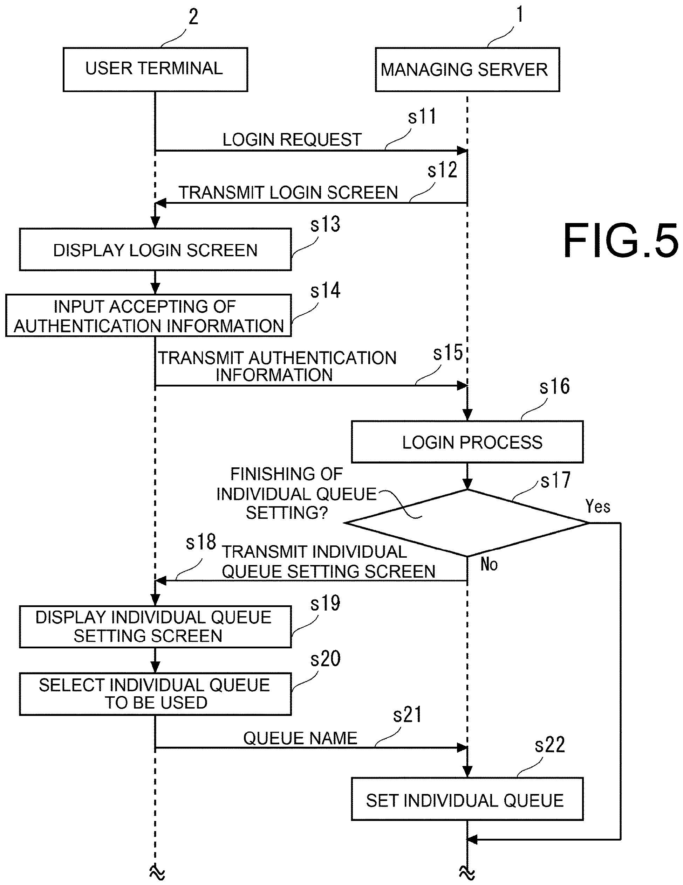

Then, with reference to FIG. 5, the process flow to set individual queue 123 as the output destination of the print job by the user is described.

At first, from user terminal 2, based on the operation instruction of the user via input part 23, a login request is transmitted to managing server 1 (s11). Continuing, managing server 1 transmits a login screen to user terminal 2 corresponding to the login request (s12). In addition, managing server 1 may function as a Web server.

Subsequently, user terminal 2 displays the login screen on display part 22 (s13). Then, the input of authentication information is accepted (s14) . If authentication information, such as a user name, is inputted into the login screen, user terminal 2 transmits the inputted authentication information to managing server 1 (s15).

Managing server 1 executes a login process based on the authentication information transmitted from user terminal 2 (s16). In the login process, authentication part 131 of managing server 1 compares the authentication information transmitted from user terminal 2 with user information 121 stored in server storage part 12. That is, user authentication is executed. Thereby, authentication part 131 makes the user who is succeeded in user authentication log in to managing server 1. Then, browsing a variety of information and accepting setting that are associated with the user are permitted.

If user authentication fails, authentication part 131 does not accept login of the user but notifies that user authentication is failed to user terminal 2. Then, authentication part 131 may transmit the login screen, again.

Subsequently, individual queue setting accepting part 132 of managing server 1 refers to individual queue setting information 124. Then, individual queue setting accepting part 132 determines whether settings of individual queue 123, which the login user sets as the output destination of the print job, is finished or not (s17).

If individual queue 123 is set up (s17: Yes), the present process is ended.

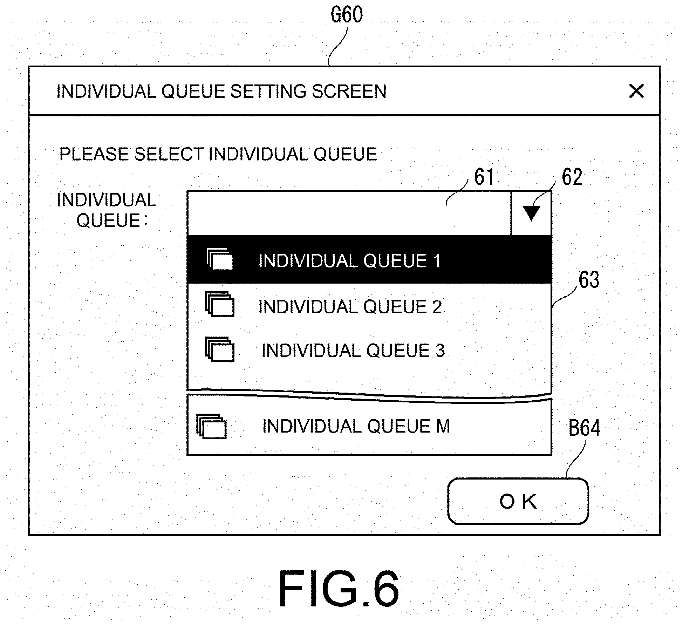

On the other hand, the case (s17: No) where individual queue 123 is not set to individual queue setting information 124 as the output destination of the print job by the user is explained. In this case, individual queue setting accepting part 132 transmits individual queue setting screen G60 as shown in FIG. 6 to user terminal 2 (s18).

User terminal 2 displays individual queue setting screen G60 transmitted from managing server 1 on display part 22 (s19) .

In individual queue setting screen G60, input column 61, list display button 62, list 63, and OK button B64 are arranged. Input column 61 is a button for inputting the individual queue 123, which is the output destination of a print job by the user. List display button 62 is a button for displaying list 63. List 63 displays a list of a plurality of individual queue 123.

The user operates list display button 62 and displays list 63. Thereby, the user can select individual queue 123 as an output destination from list 63. Also, user may operate list display button 62 in the condition that a part of queue name is inputted into input column 61. Thereby, only individual queue 123 including the inputted queue name can be displayed on list 63. When the user selects desired individual queue 123 from list 63, selected individual queue 123 is inputted into input column 61. If the queue name of individual queue 123 as the output destination is known beforehand, the direct entry of the queue name of individual queue 123 as the output destination can also be performed to input column 61.

In addition, individual queue setting accepting part 132 of managing server 1 may generate a list of individual queues 123 displayed in list 63 each time list display button 62 is operated. Individual queue setting part 251 of user terminal 2 may generate it. If individual queue setting part 251 generates it, a list of all the individual queue 123 may be previously received from individual queue setting accepting part 132 with individual queue setting screen G60. Further, as search of individual queue 123 including queue name, forward match search, partial match search, or backward match search may be sufficient.

Then, in the condition that individual queue 123 is inputted into input column 61, OK button B64 is operated. Just then, individual queue setting part 251 of user terminal 2 transmits the queue name of individual queue 123 inputted into input column 61 to managing server 1 via individual queue setting screen G60 (S21).

Individual queue setting accepting part 132 of managing server 1 registers the queue name of individual queue 123 transmitted from user terminal 2 into individual queue setting information 124 (s22). Then, the present process is ended.

Thereby, each user can access managing server 1 via user terminal 2 and can set up individual queue 123 as the output destination of the print job.

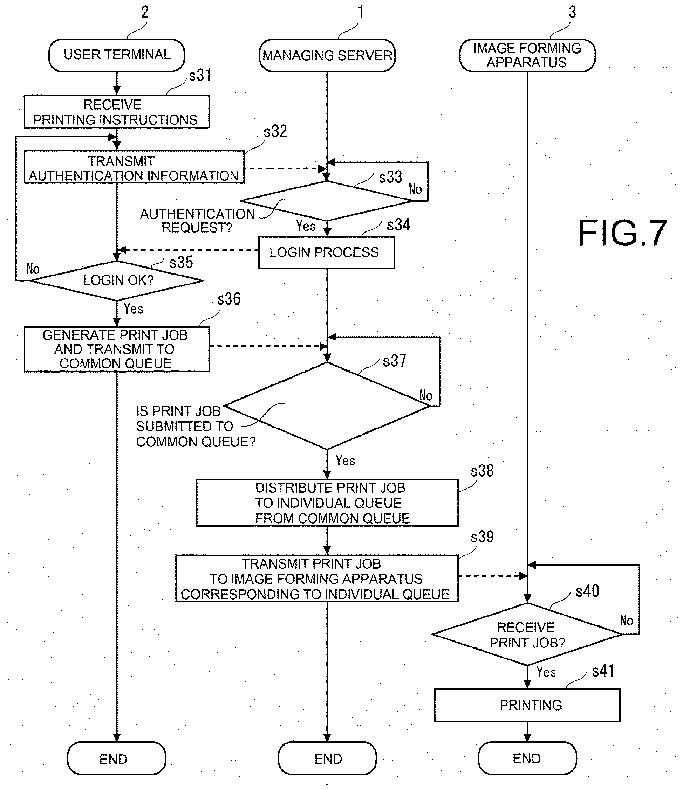

Then, with reference to FIG. 7, the flow of the printing process of image forming system X is explained.

Print job generating part 252 of user terminal 2 accepts the printing instructions from the user via input part 23 (s31) . Then, print job generating part 252 transmits authentication information, such as the user name inputted via input part 23, or the like, to managing server 1 by terminal communication part 21 (s32).

Authentication part 131 of managing server 1 waits until having the authentication request from user terminal 2 (s33, s33: No). If it has authentication request (s33: Yes), authentication part 131 executes a login process based on the authentication information transmitted from user terminal 2 (s34) .

In a login process, authentication part 131 compares the authentication information transmitted from user terminal 2 with user information 121. Thereby, authentication part 131 performs user authentication and makes the user who is succeeded in user authentication log in. The user authentication result by authentication part 131 is transmitted to user terminal 2 via server communication part 11.

Print job generating part 252 of user terminal 2 determines whether login is OK or not based on the login result notified from managing server 1 (s35). If login fails (s35: No), print job generating part 252 returns a process to s32 that it transmits authentication information. Then, print job generating part 252 may prompt the user to log in again.

On the other hand, if login is OK (s35: Yes), print job generating part 252 generates a print job based on printing instructions. Print job generating part 252 transmits the generated print job to common queue 122 of managing server 1 by terminal communication part 21 (s36) . At this time, print job generating part 252 includes the user name of the user who is logged in to the print job and transmits it to common queue 122.

Print job distributing part 134 of managing server 1 is monitoring the print job stored condition of common queue 122. Print job distributing part 134 is waiting until a print job is submit to common queue 122 (s37, s37: No). All the output destinations of printer driver 241 installed in each user terminal 2 are set as common queue 122. Therefore, all the print jobs that server communication part 11 received are stored in common queue 122.

If the print job is submitted to common queue 122 (s37: Yes), print job distributing part 134 specifies individual queue 123 associated with the user name included in the print job based on individual queue setting information 124. Then, print job distributing part 134 distributes the print job of common queue 122 to specified individual queue 123 (s38). Thereby, the print job is moved from common queue 122 to individual queue 123.

Subsequently, print job transmitting part 135 transmits the print job stored in individual queue 123 to image forming apparatus 3 corresponding to individual queue 123 by server communication part 11 (s39).

Image forming apparatus 3 is waiting until it receives the print job from managing server 1 via network 5 (s40, s40: No) .

Image forming apparatus 3 executes and prints the print job if the print job is received (s40: Yes) (s41) . The present process is completed by the above.

In typical technology, the image forming apparatus as the output destination of a print job needed to set up with settings of the printer driver. Therefore, to provide an image forming system for a customer, when a service person installs a printer driver on each user terminal, the image forming apparatus as the output destination must be set, individually. Therefore, it is needed serious time and effort.

The present disclosure is accomplished in light of the above-mentioned problems and provides a technology in which the time and effort of the setting in the printer driver of a user terminal can be reduced.

On the other hand, image forming system X characterizes image forming system X in which a plurality of user terminals 2 that transmit a print job, a plurality of image forming apparatuses 3 that execute the print job, and a managing server 1 are connected via a network 5, wherein the managing server 1 includes: a common queue 122 that stores the print job transmitted from each user terminal 2, temporarily, a plurality of individual queues 123 that is associated with the plurality of image forming apparatuses 3 by one to one, an individual queue setting accepting part 132 that accepts a setting of the individual queue 123 for each user, a print job distributing part 134 that distributes the print job stored in the common queue 122 to the individual queue 123 accepted by the individual queue setting accepting part 132, a print job transmitting part 135 that transmits the print job stored in the individual queue 123 to the image forming apparatus 3 associated with the individual queue 123; and each user terminal 2 includes: a print job generating part 252 that generates the print job based on the printer driver 241 set output destination of the print job to the common queue 122.

Thereby, the print job transmitted from each user terminal 2 is temporarily-stored in common queue 122 of managing server 1, and it is distributed to individual queue 123 associated with the user who is generated the print job by print job distributing part 134. Then, the print job is transmitted to image forming apparatus 3 corresponding to individual queue 123 by print job transmitting part 135, and it is printed by image forming apparatus 3. Therefore, the output destination of printer driver 241 of each user terminal 2 can be set up common to common queue 122. Therefore, when image forming system X is applied to a large-scale customer, the time and effort to change setting of each printer driver 241 installed in thousands or tens of thousands of user terminals 2 can be saved. Therefore, time and effort of service person can be reduced, and image forming system X can be provided at low cost.

That is, according to the present disclosure, the time and effort of the setting in the printer driver of the user terminal can be reduced.

In addition, individual queue setting part 251 may be included in the function of printer driver 241. For example, when user terminal 2 starts printer driver 241 for the first time, terminal control part 25 may function as individual queue setting part 251. Then, individual queue setting part 251 may perform user authentication with managing server 1, may receive individual queue setting screen G60, and may display it on display part 22, and may make a user set up individual queue.

Also, print job transmitting part 135 of managing server 1 may determine whether the print setting of the print job of the transmission object can be printed or not with image forming apparatus 3 as the transmission destination before transmitting a print job to image forming apparatus 3 corresponding to individual queue 123. Then, if it cannot be printed, print job transmission part 135 may notify the user who generates the print job that the print setting is inappropriate by e-mail, or the like, without transmitting the print job to the image forming apparatus 3. Also, print job transmitting part 135 may not determine whether it is printable or not, but image forming apparatus 3 may determine whether it is executable or not for the print job transmitted from print job transmitting part 135. If it cannot be printed, image forming apparatus 3 may notify the user who generates the print job that the print setting is unsuitable, by e-mail, or the like.

### <Second non claimed embodiment>

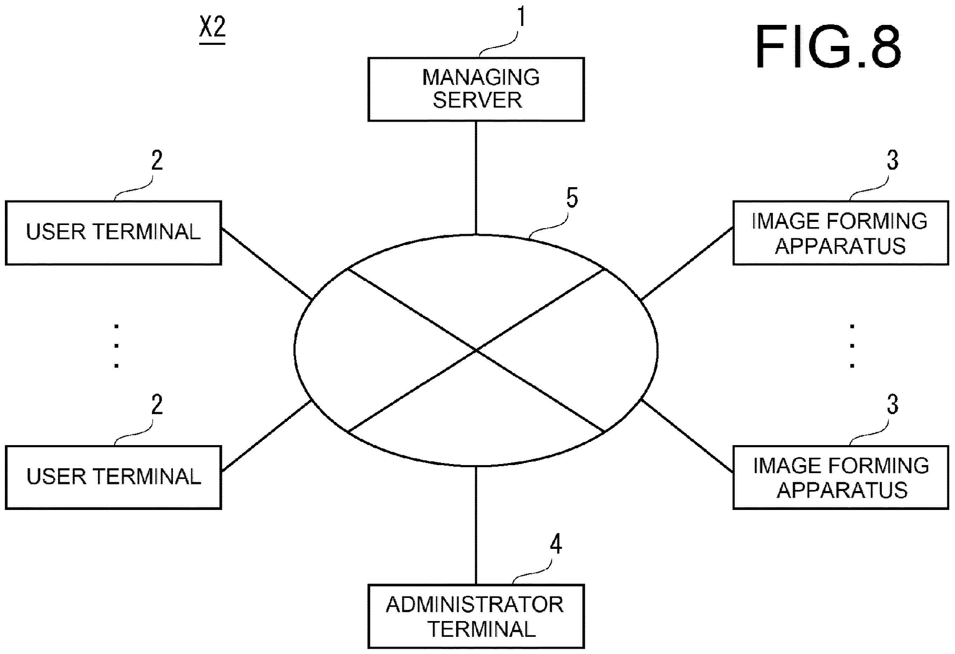

Then, with reference to figures, the second embodiment of the present disclosure is explained in detail. As shown in FIG. 8, managing server 1, a plurality of user terminals 2, a plurality of image forming apparatuses 3, and administrator terminal 4 are connected to image forming system X2 via network 5. Image forming apparatus 3 is a printer, a copying machine, an MFP, or the like, and is provided with the print function.

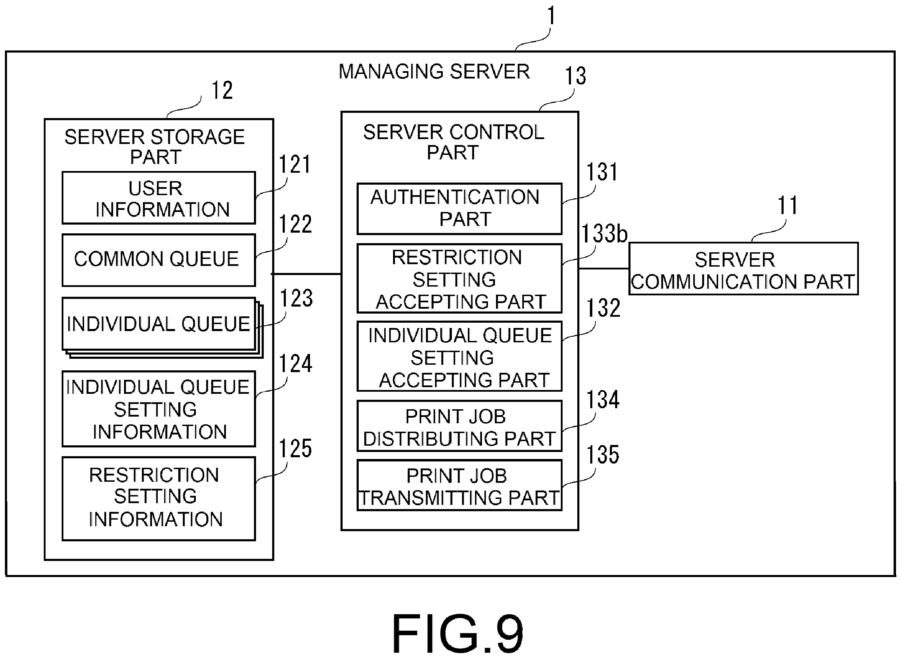

As shown in FIG. 9, managing server 1 is provided with server communication part 11, server storage part 12, and server control part 13.

In the present embodiment, server communication part 11 transmits and receives various data between a plurality of user terminals 2, a plurality of image forming apparatuses 3, and administrator terminal 4 via networks 5, such as LAN (Local Area Network), the Internet, or the like. Server communication part 11 has such a function.

Server storage part 12 is a storage means, such as semiconductor memory, HDD (Hard Disk Drive), or the like. Server storage part 12 is provided with user information 121, common queue 122, a plurality of individual queue 123, individual queue setting information 124, and restriction setting information 125. Also, system construction files, such as a "config.ini" file, or the like, are stored in server storage part 12.

User information 121 registers a user name (user ID), a password, or the like, which is used for user authentication.

Common queue 122 is queue that the print job transmitted from each user terminal 2 is stored, temporarily. According to the present embodiment, all the print jobs transmitted from each of the plurality of user terminals 2 are once stored in common queue 122.

The plurality of individual queue 123 is queue that is as the distribution destination of the print job stored in common queue 122. The plurality of individual queue 123 has three types of different kinds of queue, and there are direct queue, Print & Follow queue, and substitute printing queue.

Direct queue is provided as many as the plurality of image forming apparatuses 3 to be managed by the management server 1. In addition, direct queue corresponds to the plurality of image forming apparatuses 3 by one to one. The print job distributed from common queue 122 to direct queue is transmitted to image forming apparatus 3 corresponding to direct queue and is executed.

The print job stored in Print & Follow queue is held until the user who is generated the print job logs in to image forming apparatus 3 and selects it as a target for executing. When the print job is selected as the target for executing, it is transmitted to image forming apparatus 3 that the user logs in and is executed.

The print job stored in substitute printing queue is held until it is selected as a target for executing. The user, who is given substitute printing authority by the user who is generated the print job, performs this selection by logging in to image forming apparatus 3. The user who is given substitute printing authority can select and print not only his / her own job but also the print job, which is given the substitute printing authority. When the print job is selected as the target for executing, it is transmitted to image forming apparatus 3 that the user who is given substitute printing authority logs in, and it is executed.

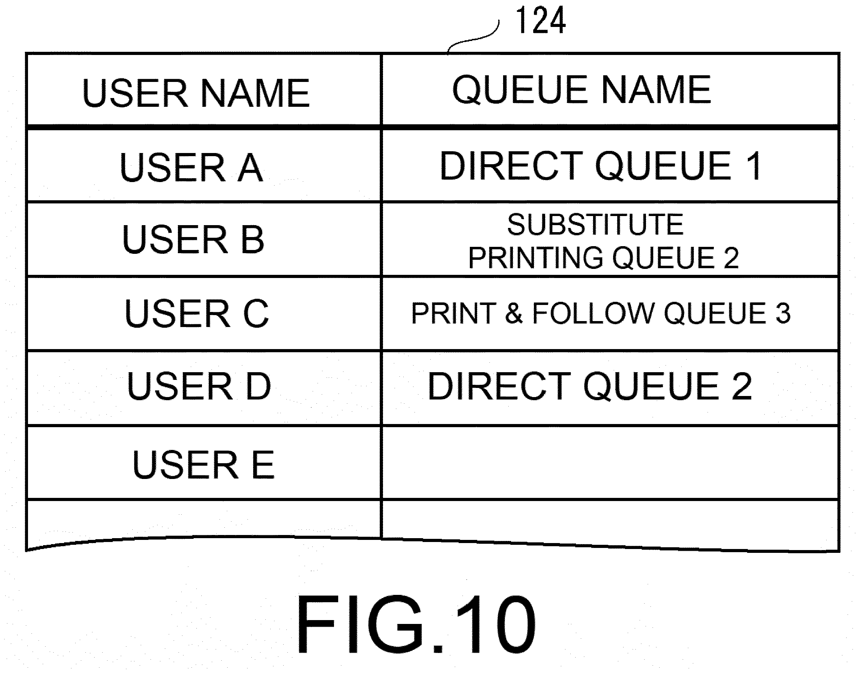

As shown in FIG. 10, in individual queue setting information 124, individual queue 123 is registered for each user. A user whose queue name is blank as like user E indicates that the setting of the individual queue 123 has not been completed yet.

In restriction setting information 125, a setting for controlling the list of individual queues 123 used when the user sets up individual queue 123 is registered.

Server control part 13 is a information processing part, such as a microcomputer provided with CPU (Central Processing Unit), ROM (Read Only Memory), RAM (Random Access Memory), or the like. The control program for operation-controlling managing server 1 is stored in ROM. CPU of server control part 13 reads the control program stored in ROM, expands the control program to RAM, and executing it, and controls as a whole managing server 1.

Also, server control part 13 functions as authentication part 131, individual queue setting accepting part 132, restriction setting accepting part 133b, print job distributing part 134b, and print job transmitting part 135.

Authentication part 131 compares authentication information with user information 121 stored in server storage part 12 and performs user authentication. Authentication part 131 has such a function. Authentication information is a user name (user ID), a password, or the like, which is transmitted via network 5 from a plurality of user terminals 2, or a plurality of image forming apparatuses 3, or administrator terminal 4.

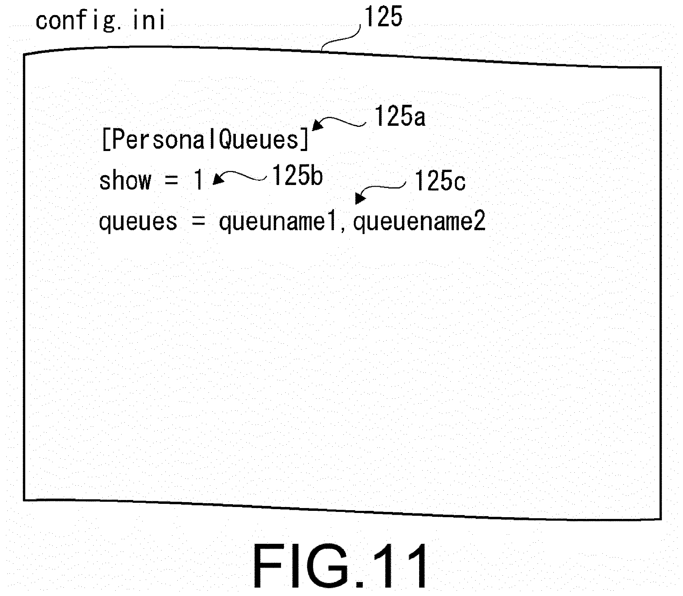

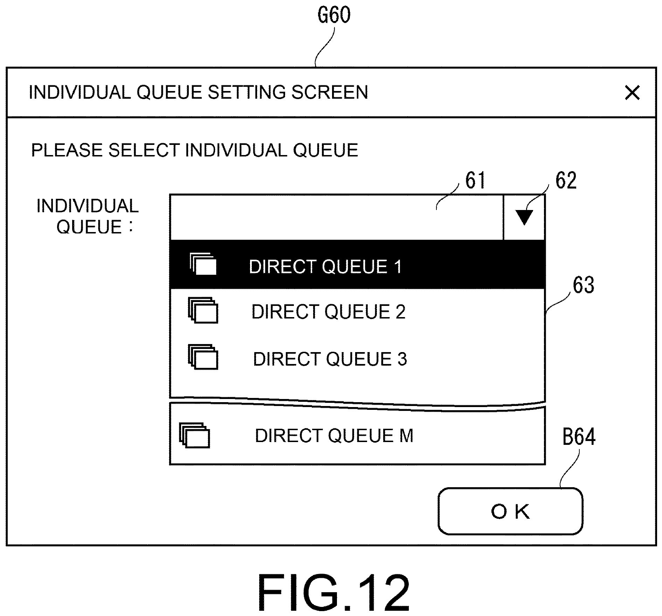

Restriction setting accepting part 133b accepts the setting that restricts the type of individual queue 123 that can be set up by manager authority. These setting are accepted via the after-mentioned individual queue setting screen G60 (FIG. 12) . As shown in FIG. 11, restriction setting accepting part 132 permits the editing for the configuration file of managing servers 1, such as a "config file," if the user authenticated by authentication part 131 is an administrator. Then, restriction setting accepting part 132 may make restriction setting information 125 input in the config file.

Restriction setting information 125 has validation parameter 125a, type parameter 125b, and list parameter 125c. Validation parameter 125a validates use of individual queue 123. Type parameter 125b specifies the type of individual queue 123 that the user is permitted to use. List parameter 125c specifies the list of usable queue name.

Validation parameter 125a is validated if "[PersonalQueues]" is inputted in the config file.

Type parameter 125b is a parameter to set up the type of individual queue 123, which can be selected by the user. As for type parameter 125b, a parameter value is set up between "show = 1 - 3." If "show = 1" is inputted, individual queue 123 of all the types can be selected. If "show = 2" is inputted, only "Print & Follow queue" and "substitute printing queue" can be selected, and selection of direct queue becomes impossible. If "show = 3" is inputted, only direct queue can be selected.

List parameter 125c is a parameter to set up the list of the queue name of individual queue 123, which can be selected by the user. List parameter 125c can include the queue name, which is inputted after "queues =", in the list. The queue name of a plurality of full name can be continued and set up with separating by commas. For example, it is like "queues = queue name 1, queue name 2". In this case, a user can select individual queue 123 from the list that has queue name1 and queue name2. Also, list parameter 125c can also be set to queues = "direct_%", by using "%" as a wild card. In this case, all the individual queue 123 that starts in queue name "direct_" is included in the list.

Individual queue setting accepting part 132 generates individual queue setting screen G60 as shown in FIG. 12 based on restriction setting information 125 set up by restriction setting accepting part 133b. Individual queue setting accepting part 132 accepts the setting of individual queue 123 as the output destination of the print job for each user. Individual queue setting accepting part 132 has such a function.

In individual queue setting screen G60, input column 61, display button 62, list 63, and OK button B64 are arranged. Input column 61 is used for inputting individual queue 123 as the output destination of the print job by the user. List display button 62 is used for displaying list 63. List 63 displays the list of the plurality of individual queue 123.

Individual queue setting screen G60 is generated if " [PersonalQueues] " is set up in the config file. In individual queue setting screen G60, individual queue 123 of the type set up by type parameter 125b can be selected. In the list 63, individual queue 123 of the queue name set up by list parameter 125c is displayed. The administrator restricts the type and the number of the individual queue 123 according to the customer environment, thereby reducing the user's choices. Therefore, the user can easily select the individual queue 123.

The user can select desired individual queue 123 from list 63. Also, the user can operate list display button 62 in the condition that a part of queue name is inputted into input column 61. As a result, only the individual queue 123 of the type set by type parameter 125b and including the input queue name can be displayed in the list 63. When the user selects desired individual queue 123 from list 63, selected individual queue 123 is inputted into input column 61. The direct entry of the queue name of desired individual queue 123 can also be performed to input column 61.

In addition, the list of individual queues 123 displayed on list 63 may be generated by the individual queue setting accepting part 132 of the management server 1 each time list display button 62 is operated. Alternatively, individual queue setting part 251 of user terminal 2 may generate it. If individual queue setting part 251 generates it, a list of all the individual queue 123 may be received from individual queue setting accepting part 132 with individual queue setting screen G60 in advance. In addition, the search of the individual queue 123 including the queue name may be forward match search, partial match search, backward match search.

In the condition that individual queue 123 is inputted into input column 61, OK button B64 is operated. Then, individual queue setting accepting part 132 associates the user with individual queue 123 inputted into input column 61 and registers it into individual queue setting information 124.

According to the present embodiment, the after-mentioned printer driver 241 installed in each user terminal 2 is set up that the output destination of a print job is common queue 122, commonly. Therefore, individual queue 123 serving as the output destination of the print job can be set up by the user side. In this way, individual queue setting accepting part 132 is provided.

Print job distributing part 134b is monitoring the stored condition of the print job in common queue 122. If the print job is stored in common queue 122, print job distributing part 134b distributes a print job to individual queue 123 associated with the user name included in the print job. This is performed based on individual queue setting information 124. Print job distributing part 134b has such a function.

Print job transmitting part 135 monitors the stored condition of the print job in each individual queue 123. Print job transmitting part 135 transmits the print job stored in each individual queue 123 via server communication part 11. The transmission destination is image forming apparatus 3 corresponding to the individual queue 123. Print job transmitting part 135 has such a function.

Then, the schematic configuration of user terminal 2 is explained once more with reference to FIG. 4.

Individual queue setting part 251 communicates with managing server 1 via terminal communication part 21 based on the operation instruction from input part 23. Individual queue setting part 251 sets the individual queue 123 to be the output destination of the print job by the user. Individual queue setting part 251 has such a function. Here, the output destination of printer driver 241 is set as common queue 122. Therefore, the print job is to be moved from the common queue 122 to the individual queue 123 desired by the user.

Print job generating part 252 generates the print job that makes the document data print. The generation of the print job is performed when printing of the document data browsed and edited by using browser 242 or document creation software 243 is instructed. Print job generating part 252 has such a function. When printing of document data is instructed, terminal control part 25 starts printer driver 241. This is performed by the terminal control part 25 reading out the printer driver 241 stored in the terminal storage part 24, expanding it in the RAM, and executing it. Thereby, terminal control part 25 functions as print job generating part 252 that realizes the function of printer driver 241.

Then, once more with reference to FIG. 5, the process flow that the user sets up individual queue 123 as output destination of the print job in the present embodiment is described.

Individual queue setting part 251 of user terminal 2 transmits a login request to managing server 1 based on the operation instruction of the user via input part 23 (s11). Subsequently, authentication part 131 of managing server 1 transmits a login screen to user terminal 2 corresponding to the login request (s12). In addition, managing server 1 may function as a Web server.

Continuing, individual queue setting part 251 displays the login screen on display part 22 (s13). Individual queue setting part 251 accepts the input of authentication information (s14). When authentication information, such as a user name, or the like, is inputted into the login screen, individual queue setting part 251 transmits the inputted authentication information to managing server 1 (s15).

Authentication part 131 of managing server 1 executes a login process based on the authentication information transmitted from user terminal 2 (s16). In a login process, authentication part 131 of managing server 1 compares the authentication information transmitted from user terminal 2 with user information 121 stored in server storage part 12. Thereby, user authentication is executed. Accordingly, authentication part 131 makes the user who is succeeded in user authentication log in to managing server 1. Authentication part 131 permits browsing a variety of information and accepting setting associated with the user.

In addition, if user authentication fails, authentication part 131 does not accept login of the user. Then, authentication part 131 may notify user terminal 2 that user authentication is failed and may transmit the login screen, again.

Subsequently, individual queue setting accepting part 132 of managing server 1 refers to individual queue setting information 124. Individual queue setting accepting part 132 determines whether the logged-in user has set the individual queue 123 as the output destination of the print job or not (s17) .

If individual queue 123 is set up (s17: Yes), the present process is ended.

On the other hand, if individual queue 123 is not set to individual queue setting information 124 as the output destination of the print job of the user (s17: No), individual queue setting accepting part 132 transmits individual queue setting screen G60 to user terminal 2 (s18).

Individual queue setting part 251 of user terminal 2 displays individual queue setting screen G60 transmitted from managing server 1 on display part 22 (s19).

Continuing, individual queue setting part 251 accepts selection of individual queue 123 that the user uses via individual queue setting screen G60. Individual queue setting part 251 transmits, when OK button B64 is operated, the queue name of individual queue 123 inputted into input column 61 to managing server 1 (S21).

Individual queue setting accepting part 132 of managing server 1 associates the queue name of individual queue 123 transmitted from user terminal 2 with the user and registers it into individual queue setting information 124 (s22) . Then, the present process is ended.

Thereby, each user can access managing server 1 via user terminal 2 and can set up individual queue 123 as the output destination of the print job.

Then, once more with reference to FIG. 7, the flow of the printing process of image forming system X2 is explained. Here, as an example, a case where the user who instructed printing sets a direct queue as the individual queue 123 is explained, and the differences in process from the first embodiment is described.

Print job distributing part 134b of managing server 1 is monitoring the print job stored condition of common queue 122. Print job distributing part 134b is waiting until the print job is submitted to common queue 122 (s37, s37: No). All the output destinations of printer driver 241 installed in each user terminal 2 are set as common queue 122. Therefore, all the print jobs that server communication part 11 received from user terminal 2 are stored in common queue 122.

If the print job is submitted to common queue 122 (s37: Yes), print job distributing part 134b specifies individual queue 123 associated with the user name included in the print job based on individual queue setting information 124. Then, print job distributing part 134b distributes the print job of common queue to specified individual queue 123 (s38) . Thereby, the print job is moved from common queue 122 to individual queue 123 (direct queue) that the user set up.

Continuing, print job transmitting part 135 transmits the print job stored in individual queue 123 that is direct queue to image forming apparatus 3 corresponding to this individual queue 123 by server communication part 11 (s39).

Thus, image forming system X2 is an image forming system in which a plurality of user terminals 2 that transmit a print job, a plurality of image forming apparatuses 3 that execute the print job, and a managing server 1 are connected via a network 5, wherein the managing server 1 includes: a common queue 122 that stores the print job transmitted from each user terminal 2, temporarily, a plurality of types of individual queues 123 that serves as distribution destination of the print job, a restriction setting accepting part 133b that accepts a setting to restrict the type of the individual queue 123 selectable as the distribution destination, an individual queue setting accepting part 132 that accepts a setting of the individual queue 123 for each user in the type of the individual queue 123 restricted by the restriction setting accepting part 133b, a print job distributing part 134b that distributes the print job stored in the common queue 122 to the individual queue 123 accepted by the individual queue setting accepting part 132, and a print job transmitting part 135 that transmits the print job stored in the individual queue 123 to the image forming apparatus 3 associated with the individual queue 123; and each user terminal 2 includes: a print job generating part 252 that generates the print job based on the printer driver 241 set output destination of the print job to the common queue 122.

Thereby, the print job transmitted from each user terminal 2 is temporarily stored in common queue 122 of managing server 1 and is distributed to individual queue 123 associated with the user who is generated the print job by print job distributing part 134b. Then, a print job is transmitted to image forming apparatus 3 corresponding to individual queue 123 by print job transmitting part 135, and it is printed with image forming apparatus 3. As a result, the output destination of printer driver 241 of each user terminal 2 can be set up common to common queue 122. Therefore, when image forming system X2 is applied to a large-scale customer, a service person can save the time and effort to change setting of each printer driver 241, which is installed in thousands or tens of thousands of user terminals 2. Therefore, image forming system X2 can be provided at low price.

In addition, individual queue setting part 251 may be included in the function of printer driver 241. For example, when user terminal 2 starts printer driver 241 for the first time, terminal control part 25 may function as individual queue setting part 251. Then, individual queue setting part 251 may perform user authentication with managing server 1. In this case, individual queue setting screen G60 may be received, and it may be displayed on display part 22. Then, a user may be set up the individual queue.

Also, print job transmitting part 135 of managing server 1 may determine whether the print setting of the print job of a transmission object can be printed with image forming apparatus 3 as the transmission destination or not before transmitting the print job to image forming apparatus 3 corresponding to individual queue 123. Then, if it cannot be printed, print job transmitting part 135 does not need to transmit the print job to image forming apparatus 3. In this case, print job transmitting part 135 may notify the user who is generated the print job that the print setting is unsuitable by e-mail, or the like. Also, instead of determining whether it can be print or not by print job transmitting part 135, image forming apparatus 3 may determine whether the print job transmitted from print job transmitting part 135 can be executed or not. If it cannot be printed, image forming apparatus 3 may notify the user who is generated the print job that the print setting is unsuitable by e-mail, or the like.

### <Third embodiment>

Then, with reference to figures, the third embodiment of the present disclosure is explained in detail. Image forming system X3 according to the present embodiment is performing the equivalent configuration as image forming system X2 as shown in FIG. 8. In addition, managing server 1 may function as a web server.

Server storage part 12 is memory means, such as semiconductor memory, HDD (Hard Disk Drive), or the like. Server storage part 12 is provided with user information 121, common queue 122, a plurality of individual queue 123, individual queue setting information 124, and common queue setting information 126. The plurality of individual queue 123 corresponds to the plurality of image forming apparatuses 3 by one to one. System construction files, such as a "config.ini" file, or the like, are also stored in server storage part 12.

Common queue setting information 126 defines job processing settings of the print job stored in common queue 122 . For example, when the user has registered the plurality of individual queue 123, it may be defined as distributing the print job to any one of individual queues 123. Also, it may be defined that any one of the print jobs of the specific print setting is distributed to individual queue 123 of image forming apparatus 3, which can execute this print job.

Also, server control part 13 functions as authentication part 131, individual queue setting accepting part 132, common queue setting accepting part 133c, and print job distributing part 134, and print job transmitting part 135.

Individual queue setting accepting part 132 has the function to accept for each user the setting of individual queue 123 as the output destination of the print job for each user. The user sets up individual queue 123 corresponding to image forming apparatus 3 as the output destination of the print job among the plurality of individual queue 123. Individual queue setting accepting part 132 accepts setting of individual queue 123 from the user via a web screen, for example.

According to the present embodiment, the after-mentioned printer driver 241 installed in each user terminal 2 is set up the output destination of the print job to common queue 122, commonly. Therefore, in order that the print job can be moved from common queue 122 to desired individual queue 123 by the user side, individual queue setting accepting part 132 is provided.

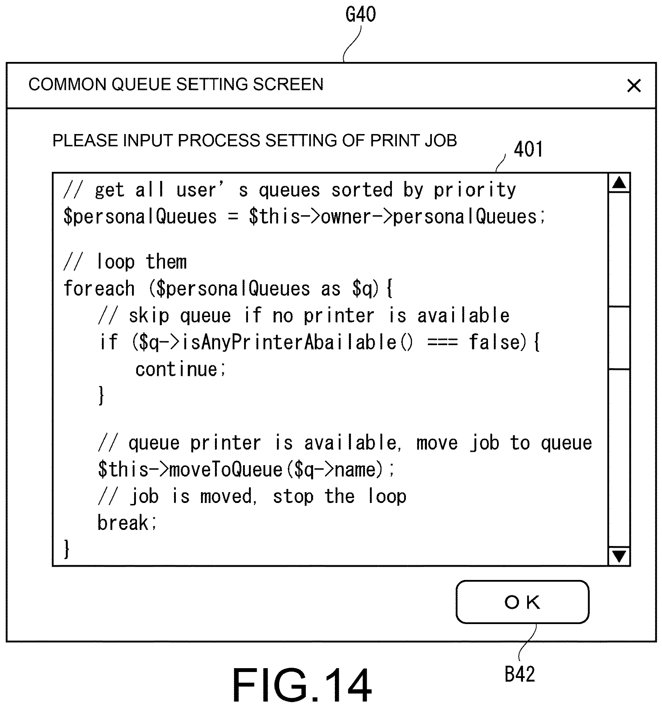

Common queue setting accepting part 133c accepts job process setting of the print job by administrator authority and assigns it to common queue 122. Common queue setting accepting part 133c has such a function. Common queue setting accepting part 133c accepts print job process setting from administrator terminal 4, for example, via common queue setting screen G40 as shown in FIG. 14. In common queue setting screen G40, input column 401 and OK button B42 are provided. Input column 401 inputs job process setting. OK button B42 is used in order to assign the job process setting inputted in input column 401 to common queue 122.

Common queue setting screen G40 as shown in FIG. 14 can accept, for example, input by script languages, such as PHP (PHP: Hypertext Preprocessor), or the like, as job process setting. Thus, job process setting can be inputted by the script language. Therefore, the administrator can flexibly-input job process setting of the print job corresponding to customer request.

For example, input column 401 checks the operating state of image forming apparatus 3 corresponding to individual queue 123 that the user set up for each print job. Input column 401 is inputted in order that the print job may be distributed to this individual queue 123 when image forming apparatus 3 is usable. Also, a print job of color printing may be distributed to individual queue 123 of image forming apparatus 3, which can be color-printed. Also, a print job with a paper size of A3 may be distributed to individual queue 123 of image forming apparatus 3, which the output paper of A3 is stored. According to this, the print job is automatically-distributed to individual queue 123 of image forming apparatus 3 that can execute it among the plurality of individual queue 123. This is possible even if the user has registered the plurality of individual queue 123 in individual queue setting information 124.

Also, input column 401 may be inputted in order to determine whether or not it can be printed with the print setting of the print job to be distributed on image forming apparatus 3 of individual queue 123 as a distribution destination. This may be performed before distributing the print job to individual queue 123. Then, if it cannot be printed, print job transmitting part 135 does not need to distribute the print job to individual queue 123. Accordingly, print job transmitting part 135 notifies that the print setting is inappropriate by e-mail addressed to the user, or the like, who is generated the print job. It may be inputted as like these.

Also, input column 401 may be inputted, when the print job to which the document data for confidential is set as a printing object is stored in common queue 122, to inform warning to the administrator by e-mail, or the like. In this case, input column 401 may be input, when there is no permission of the user registered in advance, not to move the print job to the individual queue 123. The user registered in advance is, for example, a supervisor, or the like. According to this, the job process setting for security measure can be assigned to common queue 122. Therefore, the security function corresponding to customer request can be added to image forming system X3, easily.

Also, input column 401 may be performed the job process settings to the print job of the user who has not been set individual queue 123 to individual queue setting information 124 yet. This may be programmed. For example, the print job of the user who has not been set individual queue 123 to individual queue setting information 124 may not distribute to individual queue 123. In this case, it may be held to common queue 122.

Print job distributing part 134 is monitoring the stored condition of the print job of common queue 122. Print job distributing part 134 distributes the print job to any one of the plurality of individual queues 123 when the print job is stored in common queue 122. This distribution is performed based on common queue setting information 126 and individual queue setting information 124. Print job distributing part 134 has such a function. For example, print job distributing part 134 executes job process setting of common queue setting information 126. In this case, job process setting are script languages. The print job can be moved from common queue 122 to individual queue 123, which the user registers to individual queue setting information 124. In addition, in this case, the user name who is generated the print job is included in the job information of the print job.

Print job transmitting part 135 monitors the stored condition of the print job of each individual queue 123. Print job transmitting part 135 transmits the print job stored in each individual queue 123 to image forming apparatus 3 corresponding to each the individual queue 123 via server communication part 11. Print job transmitting part 135 has such a function.

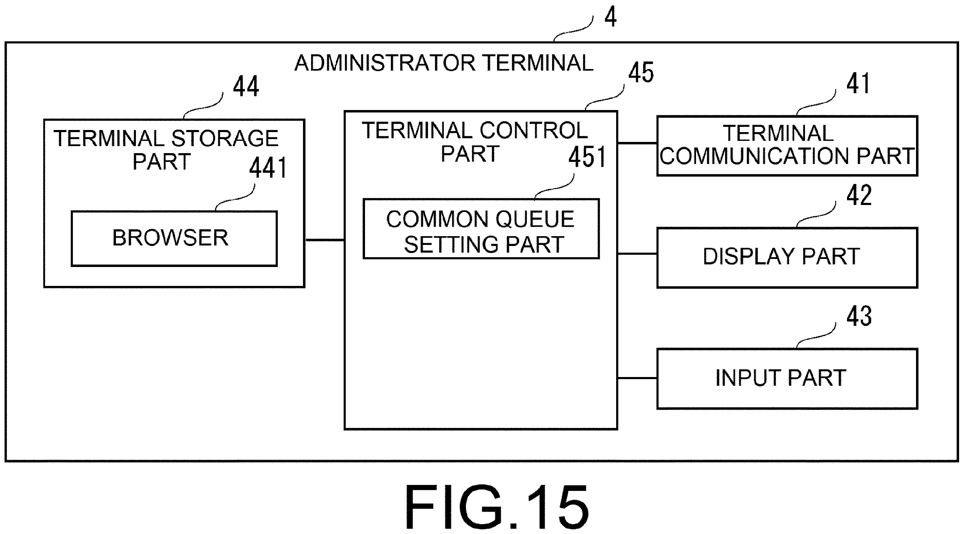

Then, with reference to FIG. 15, the schematic configuration of administrator terminal 4 is described. Administrator terminal 4 is, for example, a personal computer, a tablet terminal, a smart phone, or the like. Administrator terminal 4 is provided with terminal communication part 41, display part 42, input part 43, terminal storage part 44, and terminal control part 45.

Terminal communication part 41 transmits and receives various data between managing servers 1 via networks 5, such as LAN, the Internet, or the like. Terminal communication part 41 has such a function.

Display part 42 is a displaying means of the display, or the like, which display a variety of information.

Input part 43 is an input means of a mouse, a keyboard, a pointing device, or the like. Input part 43 may be provided in the display surface of display part 42 as a transparent touch sensor. That is, input part 43 may function as a touch panel with display part 42. Also, input part 43 may read IC card, such as an employee ID card, or the like, and acquires authentication information, such as a user name, or the like.

Terminal storage part 44 is memory means, such as semiconductor memory, HDD, or the like. In terminal storage part 44, browser 441 is stored.

Browser 441 is an application program that displays web pages, such as HTML form, or the like, on display part 42. When start operation of browser 441 is performed via input part 43, terminal control part 45 reads the browser 441 stored in the terminal storage part 44, expands it in the RAM, and executes it. That is, terminal control part 45 starts browser 441. Thereby, the administrator can browse displayed HTML data, or the like, on display part 42 by using browser 441.

Terminal control part 45 is information processing part, such as a microcomputer provided with CPU, ROM, RAM, or the like. The control program for operation-controlling administrator terminal 4 is stored in ROM. CPU of terminal control part 45 reads the control program stored in ROM, expands the control program to RAM, and executes it. Thereby, CPU controls a whole administrator terminal 4.

Also, terminal control part 45 communicates with managing server 1 based on the operation instruction from input part 43. When the administrator logs in to managing server 1, common queue setting screen G40 is displayed on display part 42. Thereby, terminal control part 45 functions as common queue setting part 451.

Common queue setting part 451 assigns job process setting of the print job that the administrator inputs to input column 401 to common queue 122 via common queue setting screen G40. Common queue setting part 451 has such a function. Thereby, it is possible to reduce the development man-hour in case that image forming system X3 corresponding to each job process setting of print job desired by each customer is provided.

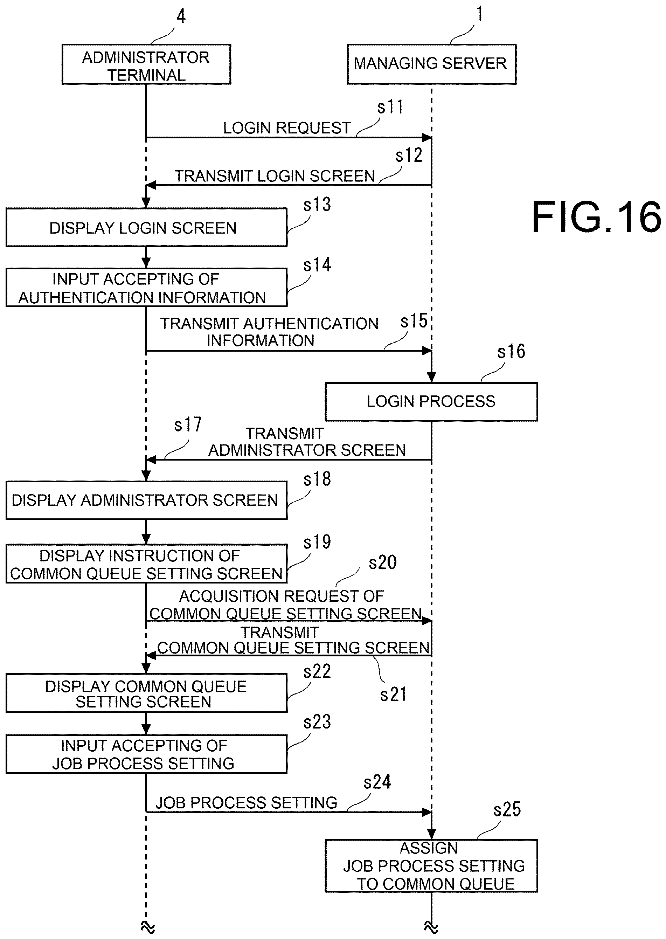

Then, with reference to FIG. 16, a flow of a process is described that the administrator sets job process settings of the print job in the common queue 122.

At first, based on the operation instruction of the administrator via input part 43, a login request is transmitted from administrator terminal 4 to managing server 1 (s11). Continuing, managing server 1 transmits a login screen to administrator terminal 4 corresponding to the login request (s12) .

Continuing, administrator terminal 4 displays the login screen on display part 42 (s13). Administrator terminal 4 accepts the input of authentication information (s14). When authentication information, such as administrator name, or the like, is inputted to the login screen, administrator terminal 4 transmits the inputted authentication information to managing server 1 (s15).

Managing server 1 executes the login process based on the authentication information transmitted from administrator terminal 4 (s16). In the login process, authentication part 131 of managing server 1 executes user authentication. Authentication part 131 compares the authentication information transmitted from administrator terminal 4 with user information 121 stored in server storage part 12. Thereby, authentication part 131 makes the administrator who is succeeded in user authentication log in to managing server 1. Then, the administrator screen that permits browsing a variety of information and accepting setting associated with the administrator is transmitted (s17).

If user authentication fails, authentication part 131 does not need to accept the login of the administrator. Authentication part 131 may notify administrator terminal 4 that user authentication failed and may transmit the login screen, again.

Continuing, administrator terminal 4 displays the administrator screen on display part 42 (s18) . Administrator terminal 4 accepts the display instruction of common queue setting screen G40 (s19) . Administrator terminal 4 transmits the acquisition request of common queue setting screen G40 to managing server 1 (s20). For example, common queue setting screen G40 may be transitionable from the administrator screen.

Subsequently, common queue setting accepting part 133c of managing server 1 transmits common queue setting screen G40 to administrator terminal 4 (s21). Administrator terminal 4 displays common queue setting screen G40 on display part 42 (s22) and functions as common queue setting part 451. Administrator terminal 4 accepts the input of job process setting to input column 401 via input part 43 (s23).

Then, by operating OK button B42, common queue setting part 451 transmits the job process setting inputted to input column 401 to managing server 1 (s24). Continuing, common queue setting accepting part 133c of managing server 1 sets the transmitted job process setting to common queue setting information 126 and assigns it to common queue 122 (s25) . The present process is completed by the above-mentioned.

As a result, the job process setting of the print job set by the administrator can be assigned to the common queue 122 in which all the print jobs are stored, temporarily. Therefore, for all the print jobs, job process setting of the print job that the administrator sets up is applicable.

In addition, instead of logging in managing server 1 from administrator terminal 4 via network 5, it may provide a display part and an input part in managing server 1. That is, the administrator may operate managing server 1, directly, and may log in to managing server 1. In this case, the administrator may display the common queue setting screen G40 so that the job process setting of the print job can be input.

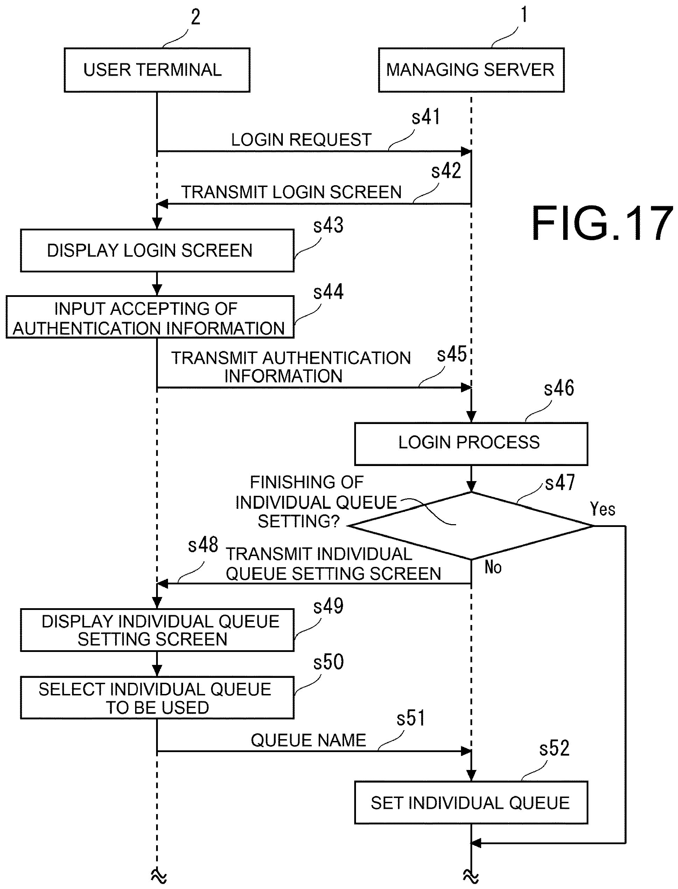

Then, with reference to FIG. 17, the flow of the processing for the user to set the individual queue 123 is described. This process is similar to the process in FIG. 5, so only the differences is described.

In the condition that individual queue 123 is inputted into input column 61, OK button B64 (FIG. 6) is operated. Then, individual queue setting part 251 of user terminal 2 interprets as being selected individual queue 123 used by the user (s50) . Individual queue setting part 251 transmits the queue name of individual queue 123 inputted to input column 61 to managing server 1 via individual queue setting screen G60 (s51).

Individual queue setting accepting part 132 of managing server 1 registers the queue name of individual queue 123 transmitted from user terminal 2 to individual queue setting information 124 (s52). Then, the present process is ended.

Thereby, each user can access managing server 1 via user terminal 2 and can set up individual queue 123 as the output destination of the print job. Therefore, the output destination of printer driver 241 can be set up commonly to common queue 122. Accordingly, a service person's time and effort can be reduced.

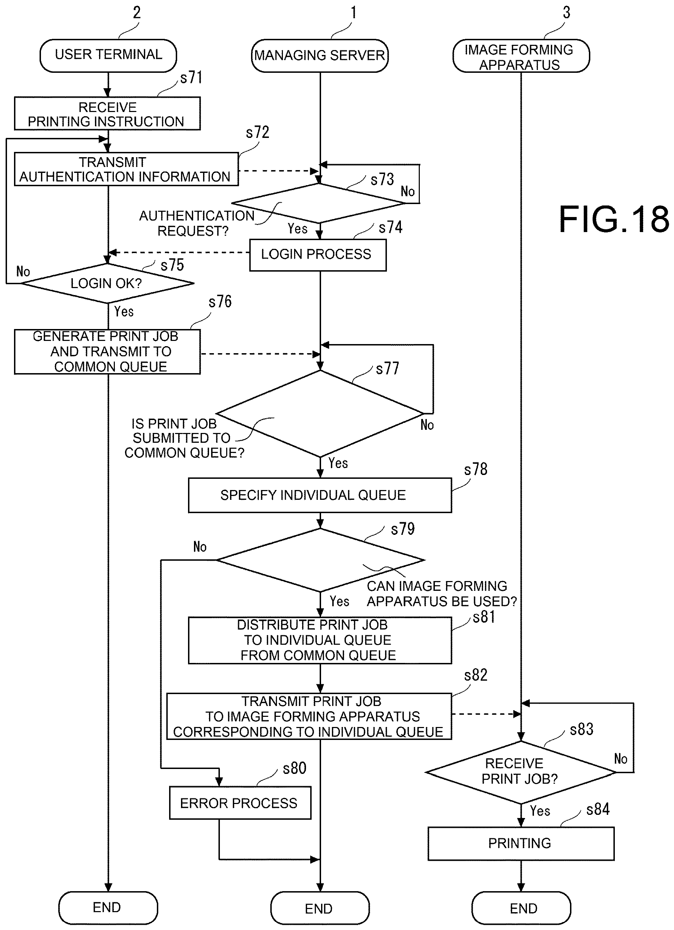

Then, with reference to FIG. 18, the flow of the printing process of image forming system X3 is explained. Here, the case where job process setting is set to common queue setting information 126 when the print job is stored in common queue 122 is explained. Job process setting is setting for moving the print job to individual queue 123 of usable (available) image forming apparatus 3 among individual queue 123 set up by the user.

Print job generating part 252 of user terminal 2 accepts the printing instructions from the user via input part 23 (s71) . Print job generating part 252 transmits authentication information, such as a user name inputted via input part 23, or the like, to managing server 1 by terminal communication part 21 (s72).

Authentication part 131 of managing server 1 waits until an authentication request is sent from user terminal 2 (s73, s73: No). If the authentication request is sent (s73: Yes), authentication part 131 executes a login process based on the authentication information transmitted from user terminal 2 (s74) .

In the login process, authentication part 131 compares the authentication information transmitted from user terminal 2 with user information 121. Thereby, authentication part 131 performs user authentication and makes the user who is succeeded in user authentication log in. The user authentication result by authentication part 131 is transmitted to user terminal 2 via server communication part 11.

Print job generating part 252 of user terminal 2 determines whether login is OK or not based on the login result notified from managing server 1 (s75). If login fails (s75: No), print job generating part 252 returns a process to s32 that transmits authentication information. Then, print job generating part 252 may prompt the user to log in, again.

On the other hand, print job generating part 252 generates the print job based on printing instructions if login is OK (s75: Yes) . Print job generating part 252 transmits the generated print job to common queue 122 of managing server 1 by terminal communication part 21 (s76) . At this time, print job generating part 252 includes the logged in user name into the print job and transmits it to common queue 122.

Print job distributing part 134 of managing server 1 is monitoring the print job stored condition of common queue 122. Print job distributing part 134 is waiting until the print job is submitted to common queue 122 (s77, s77: No). The output destinations of printer driver 241 installed in each user terminal 2 are all set in common queue 122. Therefore, all the print jobs that server communication part 11 received are stored in common queue 122.

If the print job is submitted to common queue 122 (s77: Yes), print job distributing part 134 refers to the common queue setting information 126. Here, the job process setting for moving the print job to individual queue 123 of usable (available) image forming apparatus 3 among individual queue 123 set by the user is set up. Therefore, print job distributing part 134 specifies individual queue 123 set by the user of the print job based on individual queue setting information 124 (s78) . If a plurality of individual queue 123 are set up, the plurality of individual queue 123 are specified.

Continuing, print job distributing part 134 determines whether image forming apparatus 3 is usable or not for each specified individual queue 123 (s79). If image forming apparatuses 3 for all the specified individual queue 123 is unusable (s79: No), print job distributing part 134 executes error processing such as notifying the user that there is no usable image forming apparatus, or the like (s80) . In this case, the present process is completed.

On the other hand, if image forming apparatus 3 of individual queue 123 is usable (s79: Yes), print job distributing part 134 distributes the print job from common queue 122 to individual queue 123 (s81). Thereby, the print job is moved from common queue 122 to individual queue 123.

Continuing, print job transmitting part 135 transmits the print job stored in individual queue 123 to image forming apparatus 3 corresponding to individual queue 123 by server communication part 11 (s82).

Image forming apparatus 3 is waiting until it receives the print job from managing server 1 via network 5 (s83, s83: No) .

If the print job is received (s83: Yes), image forming apparatus 3 executes and prints the print job (s84). The present process is completed as the above-mentioned.

Thereby, even if the print job is outputted to common queue 122 of managing server 1 by printer driver 241 of each user terminal 2, print job distributing part 134 can distribute the print job of common queue 122. In this case, print job distributing part 134 distributes to individual queue 123 of the user registered into individual queue setting information 124 based on job processing settings of common queue setting information 126. Then, the print job is transmitted from individual queue 123 to image forming apparatus 3 by print job transmitting part 135. Therefore, direct printing can be executed by image forming apparatus 3.

Thus, image forming system X3 is an image forming systems in which a plurality of user terminals 2 that transmit a print job, a plurality of image forming apparatuses 3 that execute the print job, and a managing server 1 are connected via a network 5, wherein the managing server 1 includes: a common queue 122 that stores the print job transmitted from each user terminal 2, temporarily, a plurality of individual queue 123 associated with the plurality of image forming apparatuses 3 by one to one, a common queue setting accepting part 133c that accepts job process a setting of the print job stored in the common queue 122, a print job distributing part 134 that distributes the print job stored in the common queue 122 to any one of the plurality of individual queues 123 based on the job process setting accepted by the common queue setting accepting part 133c, and a print job transmitting part 135 that transmits the print job stored in the individual queue 123 to the image forming apparatus 3 associated with the individual queue 123; and each user terminal 2 includes: a print job generating part 252 that generates the print job based on the printer driver 241 set the output destination of the print job to the common queue 122.

Thereby, the print job transmitted from each user terminal 2 is temporarily-stored in common queue 122 of managing server 1, and job process setting of common queue setting information 126 is executed by print job distributing part 134, and it is distributed to individual queue 123. Then, the print job is transmitted to image forming apparatus 3 corresponding to individual queue 123 by print job transmitting part 135, and it is printed with image forming apparatus 3. Therefore, the output destination of printer driver 241 of each user terminal 2 can be set up commonly to common queue 122, and it can develop. Therefore, when image forming system X3 is applied to a large-scale customer, the time and effort can be saved to change setting for each printer driver 241 that is installed in thousands or tens of thousands of user terminals 2. Therefore, image forming system X3 can be provided at low cost.

In addition, individual queue setting part 251 may be included in the function of printer driver 241. For example, when user terminal 2 starts printer driver 241 for the first time, terminal control part 25 may function as individual queue setting part 251. Then, individual queue setting part 251 may perform user authentication with managing server 1, receive individual queue setting screen G60, display it on display part 22, and set up individual queue 123 by the user.

Further, print job distributing part 134 may distribute the print job of common queue 122 to individual queue 123 only based on common queue setting information 126. In this case, job process setting may just be set to common queue setting information 126. This is for distributing each print job to any one of individual queues 123, uniformly, without being dependent on individual queue setting information 124. For example, the print job of black-and-white printing may be altogether distributed to individual queue 123 of a specific image forming apparatus 3. Also, distributing the print job of the specific user to individual queue 123 of specific image forming apparatus 3 may be defined as common queue setting information 126. Also, individual queue 123 for pull-print printing may be provided. If the print jobs of pull-print printing are stored in common queue, all of them may be distributed to individual queue 123 for pull-print printing. In the case of pull-print printing, the user logs in image forming apparatus 3. Thereby, the print job of the user is transmitted from individual queue 123 of pull-print printing in managing server 1 to image forming apparatus 3 that the user logged in.

## Claims

1. An image forming system in which a plurality of user terminals (2) that transmit a print job, a plurality of image forming apparatuses (3) that execute a print job, and a managing server (1) are connected via a network (5), wherein the managing server (1) includes:
a common queue (122) that stores the print job transmitted from each user terminal (2), temporarily,
a plurality of individual queues (123) associated with the plurality of image forming apparatuses (3) by one to one,
an individual queue setting accepting part (132) operable to receive from the each user terminal a queue name of the individual queue (123) for each user; and register the queue name into individual queue setting information (124),
a print job distributing part (134) that distributes the print job stored in the common queue (122) to the individual queue (123) based on the individual queue setting information (124),
a print job transmitting part (134) that transmits the print job stored in the individual queue (123) to the image forming apparatus (3) associated with the individual queue (123), and
an authentication part (131) that performs a user authentication; wherein
the individual queue setting accepting part (132) (i) determines whether setting of the individual queue (123), which the user authenticated by the authentication part (131) sets as a output destination of the print job in the individual queue setting information (124), is finished or not, and (ii) transmits, if the individual queue (123) is not set to the output destination of the print job, a individual queue setting screen (G60) to the user terminal (2),
and the each user terminal (2) includes: a printer driver (241),
a display part (22) that displays the individual queue setting screen (G60) transmitted from the individual queue setting accepting part (132) of the managing server (1), an individual queue setting part (251) that transmits to the individual queue setting accepting part (132) of the managing server (1) the queue name of the individual queue (123) selected by the user via the individual queue setting screen (G60), and
a print job generating part (252) that generates the print job based on the printer driver (241) and sends the print job to the common queue (122) of the managing server (1).

2. The image forming system according to claim 1, wherein
the managing server (1) further includes:
a restriction setting accepting part (133b) that accepts a setting to restrict the type of the individual queue (123) selectable as the distribution destination; and
the restriction setting accepting part (133b) operable to accept restriction of three kinds:
a plurality of direct queues that corresponds to the plurality of image forming apparatuses (3) by one to one and transmits a stored print job to the corresponding image forming apparatus (3),
a print and follow queue that holds the stored print job until being selected from a user who logged in to the image forming apparatus (3) as a target for executing, and
a substitute printing queue that holds the print job until the user given the substitute printing authority of the stored print job logs in to the image forming apparatus (3) and selects as a target for executing.

3. The image forming system according to claim 2, wherein
the individual queue setting accepting part (132) restricts to the type of the individual queue (123) accepted by the restriction setting accepting part (133b) for a list of selectable individual queue (123) in an individual queue setting screen (G60) that accepts a setting of the individual queue (123).

4. The image forming system according to claim 1, further including an administrator terminal (4), wherein
the managing server (1) further includes:
a common queue setting accepting part (133c) that accepts job process settings of the print job stored in the common queue (122) received from the administrator terminal (4),
a print job distributing part (134) that distributes the print job stored in the common queue (122) to any one of the plurality of individual queues (123) based on the job process settings accepted by the common queue setting accepting part (133c), and
a print job transmitting part (135) that transmits the print job stored in the individual queue (123) to the image forming apparatus (3) associated with the individual queue (123); and
the common queue setting accepting part (133c) accepts the job process settings by a script language, and the print job distributing part (134) executes the script language and distributes the print job stored in the common queue (122) to any one of the plurality of individual queue (123).

5. The image forming system according to claim 4, wherein
the print job distributing part (134) distributes the print job stored in the common queue (122) based on the job process settings accepted by the common queue setting accepting part (133c) to the individual queue (123) of the user to whom the individual queue setting accepting part (132) accepts.

6. An image forming method in which a plurality of user terminals (2) that transmit a print job, a plurality of image forming apparatuses (3) that execute a print job, and a managing server (1) are connected via a network (5), wherein:
the managing server includes (i) a common queue (122) that stores the print job transmitted from each user terminal (2), temporarily, and (ii) a plurality of individual queues (123) associated with the plurality of image forming apparatuses (3) by one to one, and each of the user terminals includes a printer driver (241), and
the method by the managing server (1) includes the steps of:
receiving from the each user terminal a queue name of the individual queue (123) for each user,
registering the queue name into individual queue setting information (124),
distributing the print job stored in the common queue (122) to the individual queue (123) based on the individual queue setting information (124),
transmitting the print job stored in the individual queue (123) to the image forming apparatus (3) associated with the individual queue (123),
performing a user authentication,
determining whether setting of the individual queue (123), which the user authenticated by the user authentication sets as a output destination of the print job in the individual queue setting information (124), is finished or not, and
transmitting, if the individual queue (123) is not set to the output destination of the print job, a individual queue setting screen (G60) to the user terminal (2); and the method by the each user terminal (2) includes the steps of:
displaying the individual queue setting screen (G60) transmitted from the managing server (1),
transmitting to the managing server (1) the queue name of the individual queue (123) selected by the user via the individual queue setting screen (G60), and
generating the print job based on the printer driver (24 and sends the print job to the common queue (122) of the managing server (1).

## Patentansprüche

1. Bilderzeugungssystem, bei dem mehrere einen Druckauftrag übertragende Benutzerterminals (2), mehrere einen Druckauftrag ausführende Bilderzeugungsgeräte (3) und ein Verwaltungsserver (1) über ein Netzwerk (5) verbunden sind, wobei der Verwaltungsserver (1) Folgendes umfasst:
eine gemeinsame Warteschlange (122), die den von jedem Benutzerterminal (2) übertragenen Druckauftrag vorübergehend speichert,
mehrere individuelle Warteschlangen (123), die mit den mehreren Bilderzeugungsgeräten (3) eins zu eins assoziiert sind,
einen individuellen Warteschlangeneinstellungs-Annahmeteil (132) mit der Aufgabe, von jedem Benutzerterminal einen Warteschlangennamen der individuellen Warteschlange (123) für jeden Benutzer zu empfangen; und den Warteschlangennamen in individuellen Warteschlangeneinstellungsinformationen (124) zu registrieren,
einen Druckauftragverteilungsteil (134), der den in der gemeinsamen Warteschlange (122) gespeicherten Druckauftrag auf der Basis der individuellen Warteschlangeneinstellinformationen (124) an die individuelle Warteschlange (123) verteilt,
einen Druckauftragsübertragungsteil (134), der den in der individuellen Warteschlange (123) gespeicherten Druckauftrag zu dem mit der individuellen Warteschlange (123) assoziierten Bilderzeugungsgerät (3) überträgt, und
einen Authentifizierungsteil (131), der eine Benutzerauthentifizierung durchführt; wobei
der individuelle Warteschlangeneinstellungs-Annahmeteil (i) feststellt, ob das Einstellen der individuellen Warteschlange (123), die der durch den Authentifizierungsteil (131) authentifizierte Benutzer als Ausgabeziel des Druckauftrags in der individuellen Warteschlangeneinstellungsinformation (124) einstellt, beendet ist oder nicht, und (ii) einen individuellen Warteschlangeneinstellungsbildschirm (G60) zum Benutzerterminal (2) überträgt, wenn die individuelle Warteschlange (123) nicht auf das Ausgabeziel des Druckauftrags eingestellt ist,
und jedes Benutzerterminal (2) Folgendes beinhaltet:
einen Druckertreiber (241),
einen Anzeigeteil (22), der den vom individuellen Warteschlangeneinstellungs-Annahmeteil (132) des Verwaltungsservers (1) übertragenen individuellen Warteschlangeneinstellungsbildschirm (G60) anzeigt,
einen individuellen Warteschlangeneinstellungsteil (251), der den Warteschlangennamen der vom Benutzer über den individuellen Warteschlangeneinstellungsbildschirm (G60) ausgewählten individuellen Warteschlange (123) zum individuellen Warteschlangeneinstellungs-Annahmeteil (132) des Verwaltungsservers (1) überträgt, und
einen Druckauftragerzeugungsteil (252), der den Druckauftrag auf der Basis des Druckertreibers (241) erzeugt und den Druckauftrag zur gemeinsamen Warteschlange (122) des Verwaltungsservers (1) sendet.

2. Bilderzeugungssystem nach Anspruch 1, wobei
der Verwaltungsserver (1) ferner Folgendes umfasst:
einen Beschränkungseinstellungs-Annahmeteil (133b), der eine Einstellung zum Beschränken des Typs der als Verteilungsziel auswählbaren individuellen Warteschlange (123) annimmt; und
wobei der Beschränkungseinstellungs-Annahmeteil (133b) die Aufgabe hat, eine Beschränkung von drei Arten anzunehmen:
mehrere direkte Warteschlangen, die den mehreren Bilderzeugungsgeräten (3) eins zu eins entsprechen und einen gespeicherten Druckauftrag zu dem entsprechenden Bilderzeugungsgerät (3) übertragen,
eine Druck- und Folgewarteschlange, die den gespeicherten Druckauftrag hält, bis er von einem beim Bilderzeugungsgerät (3) eingeloggten Benutzer als Ziel für die Ausführung ausgewählt wird, und
eine Ersatzdruckwarteschlange, die den Druckauftrag hält, bis der Benutzer, dem die Ersatzdruckberechtigung für den gespeicherten Druckauftrag erteilt wurde, sich bei dem Bilderzeugungsgerät (3) einloggt und es als Ziel für die Ausführung auswählt.

3. Bilderzeugungssystem nach Anspruch 2, wobei
der individuelle Warteschlangeneinstellungs-Annahmeteil (132) auf den Typ der individuellen Warteschlange (123) beschränkt, der vom Beschränkungseinstellungs-Annahmeteil (133b) für eine Liste auswählbarer individueller Warteschlangen (123) in einem individuellen Warteschlangeneinstellungsbildschirm (G60) angenommen wird, der eine Einstellung der individuellen Warteschlange (123) annimmt.

4. Bilderzeugungssystem nach Anspruch 1, das ferner ein Administratorterminal (4) enthält, wobei
der Verwaltungsserver (1) ferner Folgendes beinhaltet:
einen gemeinsamen Warteschlangeneinstellungs-Annahmeteil (133c), der Auftragsprozesseinstellungen des in der gemeinsamen Warteschlange (122) gespeicherten Druckauftrags annimmt, die vom Administratorterminal (4) empfangen werden,
einen Druckauftragsverteilungsteil (134), der den in der gemeinsamen Warteschlange (122) gespeicherten Druckauftrag auf der Basis der vom gemeinsamen Warteschlangeneinstellungs-Annahmeteil (133c) angenommenen Auftragsprozesseinstellungen an eine beliebige der mehreren einzelnen Warteschlangen (123) verteilt, und
einen Druckauftragsübertragungsteil (135), der den in der individuellen Warteschlange (123) gespeicherten Druckauftrag zu dem mit der individuellen Warteschlange (123) assoziierten Bilderzeugungsgerät (3) überträgt, und
der gemeinsame Warteschlangeneinstellungs-Annahmeteil (133c) die Auftragsprozesseinstellungen durch eine Skriptsprache annimmt, und der Druckauftragsverteilungsteil (134) die Skriptsprache ausführt und den in der gemeinsamen Warteschlange (122) gespeicherten Druckauftrag zu irgendeiner der mehreren individuellen Warteschlangen (123) verteilt.

5. Bilderzeugungssystem nach Anspruch 4, wobei
der Druckauftragsverteilungsteil (134) den in der gemeinsamen Warteschlange (122) gespeicherten Druckauftrag auf der Basis der von dem gemeinsamen Warteschlangeneinstellungs-Annahmeteil (133c) angenommenen Auftragsprozesseinstellungen an die individuelle Warteschlange (123) des Benutzers verteilt, den der individuelle Warteschlangeneinstellungs-Annahmeteil (132) annimmt.

6. Bilderzeugungsverfahren, bei dem mehrere einen Druckauftrag übertragende Benutzerterminals (2), mehrere einen Druckauftrag ausführende Bilderzeugungsgeräte (3) und ein Verwaltungsserver (1) über ein Netzwerk (5) verbunden sind, wobei:
der Verwaltungsserver (i) eine gemeinsame Warteschlange (122), die den von jedem Benutzerterminal (2) übertragenen Druckauftrag vorübergehend speichert, und (ii) mehrere mit den mehreren Bilderzeugungsgeräten (3) eins zu eins assoziierte individuelle Warteschlangen (123) enthält, und jedes der Benutzerterminals einen Druckertreiber (241) enthält, und
das Verfahren durch den Verwaltungsserver (1) die folgenden Schritte beinhaltet:
Empfangen eines Warteschlangennamens der individuellen Warteschlange (123) für jeden Benutzer von jedem Benutzerterminal,
Registrieren des Warteschlangennamens in individuellen Warteschlangeneinstellungsinformationen (124),
Verteilen des in der gemeinsamen Warteschlange (122) gespeicherten Druckauftrags an die individuelle Warteschlange (123) auf der Basis der individuellen Warteschlangeneinstellungsinformationen (124),
Übertragen des in der individuellen Warteschlange (123) gespeicherten Druckauftrags zu dem mit der individuellen Warteschlange (123) assoziierten Bilderzeugungsgerät (3),
Durchführen einer Benutzerauthentifizierung,
Feststellen, ob das Einstellen der individuellen Warteschlange (123), die der durch die Benutzerauthentifizierung authentifizierte Benutzer als Ausgabeziel des Druckauftrags in den individuellen Warteschlangeneinstellungsinformationen (124) einstellt, beendet ist oder nicht, und
Übertragen, wenn die individuelle Warteschlange (123) nicht auf das Ausgabeziel des Druckauftrags eingestellt ist, eines individuellen Warteschlangeneinstellungsbildschirms (G60) zum Benutzerterminal (2); und das Verfahren durch jedes Benutzerterminal (2) die folgenden Schritte beinhaltet:
Anzeigen des vom Verwaltungsserver (1) übertragenen individuellen Warteschlangeneinstellungsbildschirms (G60),
Übertragen des Warteschlangennamens der vom Benutzer über den individuellen Warteschlangeneinstellungsbildschirm (G60) ausgewählten individuellen Warteschlange (123) zum Verwaltungsserver (1), und
Erzeugen des Druckauftrags auf der Basis des Druckertreibers (24) und Senden des Druckauftrags zu der gemeinsamen Warteschlange (122) des Verwaltungsservers (1).

## Revendications

1. Système de formation d'image dans lequel une pluralité de terminaux d'utilisateur (2) qui transmettent un travail d'impression, une pluralité d'appareils de formation d'image (3) qui exécutent un travail d'impression et un serveur de gestion (1) sont connectés par l'intermédiaire d'un réseau (5),
le serveur de gestion (1) comprenant :
une file d'attente commune (122) qui stocke temporairement le travail d'impression transmis par chaque terminal d'utilisateur (2),
une pluralité de files d'attente individuelles (123) associées à la pluralité d'appareils de formation d'image (3) selon une relation biunivoque,
une partie d'acceptation de réglage de file d'attente individuelle (132) fonctionnelle pour recevoir, en provenance de chaque terminal d'utilisateur, un nom de file d'attente de la file d'attente individuelle (123) pour chaque utilisateur ; et enregistrer le nom de file d'attente dans des informations de réglage de file d'attente individuelle (124),
une partie de distribution de travail d'impression (134) qui distribue le travail d'impression stocké dans la file d'attente commune (122) à la file d'attente individuelle (123) sur la base des informations de réglage de file d'attente individuelle (124),
une partie de transmission de travail d'impression (134) qui transmet le travail d'impression stocké dans la file d'attente individuelle (123) à l'appareil de formation d'image (3) associé à la file d'attente individuelle (123), et
une partie d'authentification (131) qui effectue une authentification d'utilisateur ;
la partie d'acceptation de réglage de file d'attente individuelle (132) (i) déterminant si le réglage de la file d'attente individuelle (123), que l'utilisateur authentifié par la partie d'authentification (131) définit comme destination de sortie du travail d'impression dans les informations de réglage de file d'attente individuelle (124), est terminé ou non, et (ii) transmettant, si la file d'attente individuelle (123) n'est pas définie comme destination de sortie du travail d'impression, un écran de réglage de file d'attente individuelle (G60) au terminal d'utilisateur (2) ; et
chaque terminal d'utilisateur (2) comprenant :
un pilote d'imprimante (241),
une partie d'affichage (22) qui affiche l'écran de réglage de file d'attente individuelle (G60) transmis par la partie d'acceptation de réglage de file d'attente individuelle (132) du serveur de gestion (1),
une partie de réglage de file d'attente individuelle (251) qui transmet à la partie d'acceptation de réglage de file d'attente individuelle (132) du serveur de gestion (1) le nom de file d'attente de la file d'attente individuelle (123) sélectionnée par l'utilisateur par l'intermédiaire de l'écran de réglage de file d'attente individuelle (G60), et
une partie de génération de travail d'impression (252) qui génère le travail d'impression sur la base du pilote d'imprimante (241) et envoie le travail d'impression à la file d'attente commune (122) du serveur de gestion (1).

2. Système de formation d'image selon la revendication 1, dans lequel :
le serveur de gestion (1) comprend en outre :
une partie d'acceptation de réglage de restriction (133b) qui accepte un réglage pour restreindre le type de la file d'attente individuelle (123) pouvant être sélectionnée comme destination de distribution ; et
la partie d'acceptation de réglage de restriction (133b) étant fonctionnelle pour accepter une restriction de trois sortes :
une pluralité de files d'attente directes qui correspondent à la pluralité d'appareils de formation d'image (3) selon une relation biunivoque et transmettent un travail d'impression stocké à l'appareil de formation d'image (3) correspondant,
une file d'attente d'impression et de suivi qui conserve le travail d'impression stocké jusqu'à ce qu'il soit sélectionné par un utilisateur qui s'est connecté à l'appareil de formation d'image (3) comme cible d'exécution, et
une file d'attente d'impression de substitution qui conserve le travail d'impression jusqu'à ce que l'utilisateur disposant d'une autorisation d'impression de substitution du travail d'impression stocké se connecte à l'appareil de formation d'image (3) et le sélectionne comme cible d'exécution.

3. Système de formation d'image selon la revendication 2, dans lequel :
la partie d'acceptation de réglage de file d'attente individuelle (132) se restreint au type de la file d'attente individuelle (123) accepté par la partie d'acceptation de réglage de restriction (133b) pour une liste de files d'attente individuelles (123) sélectionnables dans un écran de réglage de file d'attente individuelle (G60) qui accepte un réglage de la file d'attente individuelle (123).

4. Système de formation d'image selon la revendication 1, comprenant en outre un terminal d'administrateur (4), et dans lequel :
le serveur de gestion (1) comprend en outre :
une partie d'acceptation de réglage de file d'attente commune (133c) qui accepte des réglages de traitement de travail du travail d'impression stocké dans la file d'attente commune (122), reçus du terminal d'administrateur (4),
une partie de distribution de travail d'impression (134) qui distribue le travail d'impression stocké dans la file d'attente commune (122) à une file d'attente individuelle quelconque de la pluralité de files d'attente individuelles (123) sur la base des réglages de traitement de travail acceptés par la partie d'acceptation de réglage de file d'attente commune (133c), et
une partie de transmission de travail d'impression (135) qui transmet le travail d'impression stocké dans la file d'attente individuelle (123) à l'appareil de formation d'image (3) associé à la file d'attente individuelle (123) ; et
la partie d'acceptation de réglage de file d'attente commune (133c) accepte les réglages de traitement de travail par un langage de script, et la partie de distribution de travail d'impression (134) exécute le langage de script et distribue le travail d'impression stocké dans la file d'attente commune (122) à une file d'attente individuelle quelconque de la pluralité de files d'attente individuelles (123).

5. Système de formation d'image selon la revendication 4, dans lequel :
la partie de distribution de travail d'impression (134) distribue le travail d'impression stocké dans la file d'attente commune (122) sur la base des réglages de traitement de travail acceptés par la partie d'acceptation de réglage de file d'attente commune (133c) à la file d'attente individuelle (123) de l'utilisateur dont la partie d'acceptation de réglage de file d'attente individuelle (132) accepte.

6. Procédé de formation d'image dans lequel une pluralité de terminaux d'utilisateur (2) qui transmettent un travail d'impression, une pluralité d'appareils de formation d'image (3) qui exécutent un travail d'impression et un serveur de gestion (1) sont connectés par l'intermédiaire d'un réseau (5),
le serveur de gestion comprenant (i) une file d'attente commune (122) qui stocke temporairement le travail d'impression transmis par chaque terminal d'utilisateur (2) et (ii) une pluralité de files d'attente individuelles (123) associées à la pluralité d'appareils de formation d'image (3) selon une relation biunivoque, et chacun des terminaux d'utilisateur comprenant un pilote d'imprimante (241), et
le procédé, par le serveur de gestion (1), comprenant les étapes consistant à :
recevoir, en provenance de chaque terminal d'utilisateur, un nom de file d'attente de la file d'attente individuelle (123) pour chaque utilisateur,
enregistrer le nom de file d'attente dans des informations de réglage de file d'attente individuelle (124),
distribuer le travail d'impression stocké dans la file d'attente commune (122) à la file d'attente individuelle (123) sur la base des informations de réglage de file d'attente individuelle (124),
transmettre le travail d'impression stocké dans la file d'attente individuelle (123) à l'appareil de formation d'image (3) associé à la file d'attente individuelle (123),
effectuer une authentification d'utilisateur,
déterminer si le réglage de la file d'attente individuelle (123), que l'utilisateur authentifié par l'authentification d'utilisateur définit comme destination de sortie du travail d'impression dans les informations de réglage de file d'attente individuelle (124), est terminé ou non, et
transmettre, si la file d'attente individuelle (123) n'est pas définie comme destination de sortie du travail d'impression, un écran de réglage de file d'attente individuelle (G60) au terminal d'utilisateur (2) ; et
le procédé, par chaque terminal d'utilisateur (2), comprenant les étapes consistant à :
afficher l'écran de réglage de file d'attente individuelle (G60) transmis par le serveur de gestion (1),
transmettre au serveur de gestion (1) le nom de file d'attente de la file d'attente individuelle (123) sélectionnée par l'utilisateur par l'intermédiaire de l'écran de réglage de file d'attente individuelle (G60), et
générer le travail d'impression sur la base du pilote d'imprimante (24) et envoyer le travail d'impression à la file d'attente commune (122) du serveur de gestion (1).
